# EUROPEAN PATENT SPECIFICATION

(11) **EP 0 972 279 B1**
(45) Date of publication and mention of the grant of the patent: **27.11.2002**
(21) Application number: 97917866.2
(22) Date of filing: 04.04.1997
(51) Int. Cl.: G09F 27/00

(54) **MEDIA WALL FOR DISPLAYING FINANCIAL INFORMATION**
MEDIENWAND ZUR ANZEIGE VON FINANZNACHRICHTEN
MUR D'AFFICHAGE D'INFORMATIONS FINANCIERES

(43) Date of publication of application: 19.01.2000
(73) Proprietor: The Nasdaq Stock Market, Inc., N.W., Washington, DC 20006-1506 (US)
(72) Inventor: APPLE, Thomas, Arlington, VA 22207-4113 (US); NOBLE, Paul, Short Hills, NJ 07078 (US); FOOTEN, John, Mt. Arlington, NJ 07856 (US); KLEIN, Andrew, Novate, CA 94945 (US)
(74) Representative: Charig, Raymond Julian
(86) International application number: US9705640
(87) International publication number: WO98045830

(56) References cited:
- WO-A-91/13518
- WO-A-92/12488
- WO-A-94/08309
- GB-A- 2 191 069
- US-A- 5 319 382

## Description

### Technical Field

This invention relates generally to the display of financial information using graphic symbols. More specifically, the invention relates to the use of firm or corporate logos instead of textual abbreviations to identify securities information in a ticker-type format or in the display of other trading information.

### Background Art

Financial trading information displays are typically spartan. For example, tickers report trades only by an alphabetic abbreviation of the security traded followed by information about the trade, such as its price. Technology has only improved the medium, not the message. The original ticker tape reported trades by remotely printing out trade information on a thin strip of paper. Later technologies displayed that same information in rows of lights or on television screens. Throughout these changes, however, the format of the information has remained the same.

Unfortunately, most people find these displays difficult to interpret. Even experienced stock analysts can remember the abbreviations for only a few securities, and the abbreviations, which are only three or four letters, sometimes reflect historic anomalies rather than an attempt to identify the security clearly.

Besides their obscurity, conventional ticker displays also have limited use. They contain minimal financial information and use the same display formats. The displays do not provide contextual information about the market or about a particular issue or security.

WO92/12488 describes a video display system in which a user determines the layout of real time data, text and other objects that should appear on the display, including streams of trade data or so-called market tickers.

WO94/08309 describes a virtual reality generator system which displays financial information in a virtual reality world represented by three-dimensional objects or metaphors to enable a user to perceive patterns and interconnections in the financial information.

One goal of this invention is to improve the display of financial information by identifying securities using their familiar corporate logos rather than textual abbreviations.

Another goal of this invention is to display contextual financial information, such as historical information or information specific to a security or market.

Yet another goal of this invention is to display information about trades between market makers in a format that is easy to comprehend.

Still another goal of this invention is to provide such information along with real-time or stored video and audio information.

An additional goal of this invention is to provide such information either in a standard schedule or in response to external events, such as dramatic changes in a stock price or user inputs.

### Disclosure of the Invention

These and other objects of the invention can be obtained by this invention for displaying financial information on a video wall by identifying securities and other entities by logos, and by providing real-time control of the displayed financial information.

In particular, a system according to this invention for dynamically displaying graphic symbols and value information for financial instruments comprises an input port to receive a feed containing identifiers and corresponding values of financial instruments; filter means for extracting from the feed the identifiers and corresponding values of the financial instruments; a memory; correlating means for finding in a data structure graphic symbols associated with the extracted identifiers; formatting means for forming a display signal with the graphic symbols and values corresponding to the financial instruments in the feed; and a video wall. The memory contains the extracted financial instrument identifiers and corresponding values, as well as the data structure associating the financial instrument identifiers with graphic symbols. The video wall includes several individual monitors arranged into a larger display plus means for receiving the display signals and for displaying on the individual monitors the graphic symbols and values corresponding to the financial instruments in the feed.

Both the foregoing general description and the following detailed description are exemplary and explanatory. They provide further explanation of the invention as claimed.

### Brief Description of the Drawings

The accompanying drawings, which are incorporated in and constitute a part of this specification, illustrate one embodiment of the invention and, together with the description, serve to explain the objects, advantages, and principles of the invention. In the drawings:
Figure 1 contains a diagram of a video wall in accordance with this invention;
Figure 1A is a diagram of the video wall of Figure 1 divided into several areas;
Figure 2 is a picture of a ticker display for the video wall in Figure 1;
Figure 3 is a picture of a market message for the video wall in Figure 1;
Figure 4A is a picture of a promotional video for the video wall in Figure 1;
Figure 4B is a picture of a teleconferencing window for the video wall in Figure 1;
Figure 4C is a picture of a news window for the video wall in Figure 1;
Figure 5 is a picture of a company trading history for the video wall in Figure 1;
Figure 6 is a picture of a peer group display for the video wall in Figure 1;
Figure 7 is a picture of a market maker summary for the video wall in Figure 1;
Figure 8 is a picture of an institutional holding display for the video wall in Figure 1;
Figure 9 is a picture of a market summary display for the video wall in Figure 1;
Figure 10 is a picture of an international market summary for the video wall in Figure 1;
Figure 11 is a picture of a market index and volume wave display for the video wall in Figure 1;
Figure 12 is a picture of a market activity display for the video wall in Figure 1;
Figure 13 is a picture of a trading summary display for the video wall in Figure 1;
Figure 14 is a picture of a trading room window for the video wall in Figure 1;
Figure 15 is a picture of a display of the most active issues for the video wall in Figure 1;
Figure 16 is a picture of an issue quote activity display for the video wall in Figure 1;
Figure 17 is a picture of a summary display for the video wall in Figure 1;
Figure 18 is a picture of an issue trading activity display for the video wall in Figure 1;
Figure 19A is a picture of a display showing live commentary to discuss the day's market activities and provide summaries and analysis;
Figure 19B is a picture of a display showing IPO conferencing for live discussion with underwriters;
Figure 19C is a picture of a display summarizing listings and delistings of issues in the previous month
Figure 19D is a picture of a display showing an IPO flag to provide a graphic introduction for an IPO's first trade
Figure 19E is a picture of a display showing a new high issue price or volume;
Figure 19F is a picture of a display highlighting unusual price or volume changes when they occur during real-time trading;
Figure 19G is a picture of a display showing new highs for an index or its volume as they occur during real-time trading;
Figure 19H is a picture of a display showing when the value of an index changes significantly during real-time trading;
Figure 20 is a block drawing of the major system elements of an embodiment of this invention;
Figure 21 is a diagram of elements of the data processing facility in Figure 20;
Figure 22 is a system diagram showing the elements in Figure 20 in greater detail;
Figure 23 is a diagram of the databases in the system of Figure 21;
Figure 24 is a diagram of a schedule for the operations of the system in Figure 20;
Figure 25 is a block diagram of an alternate data processing system shown in Figure 20;
Figure 26 is a diagram showing the data flow between the systems in Figure 25;
Figure 27 is a detailed block gram the data processing facility of Figure 25;
Figure 28 is a block diagram of the RGBS signal routing in the data processing system of Figure 25;
Figures 29 is a block diagram of the video signal routing in the data processing system of Figure 25;
Figure 30 show is a block diagram of the audio signal routing in the data processing system of Figure 25;
Figure 31 is a block diagram of different software processes to drive the system of Figure 20; and
Figure 32 is a picture of a different display on the video wall.

### 1. DESCRIPTION OF THE PREFERRED IMPLEMENTATION

### A. System Overview

### i. Video wall displays

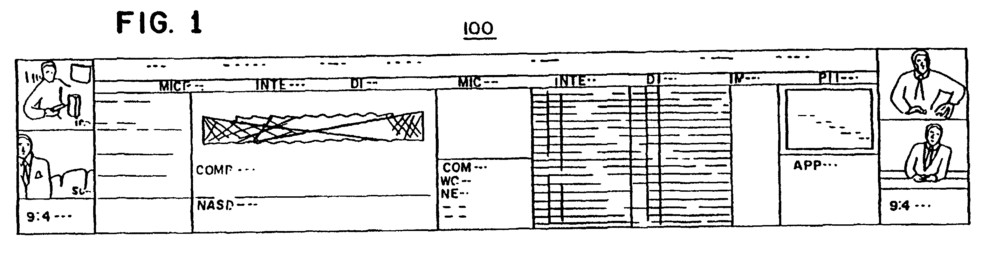

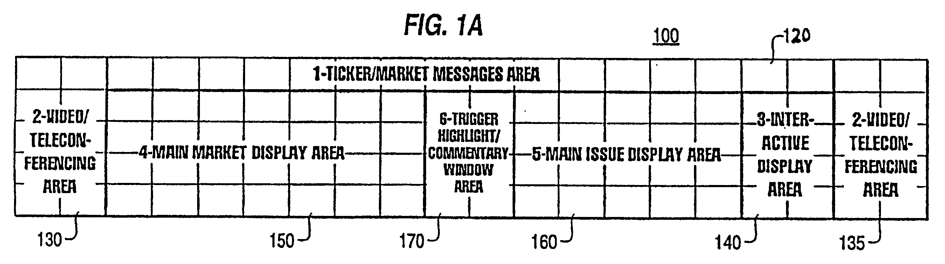

Figure 1 contains a diagram of a video wall 100 composed of a matrix of video monitors. Video wall 100 can include static, dynamic, and real-time displays as well as combinations of such displays. Information for the displays can come from many sources. For example, video and audio information can come from cable or network news or closed circuit feeds, and data can come either from securities exchanges, such as The NASDAQ Stock Market, or from vendor or market data.

Figure 1A shows an outline of video wall 100 of Figure 1 divided into several areas: ticker-market message area 120, vldeo/teleconferencing areas 130 and 135, interactive display area 140, main market display area 150, main issue display area 160, and commentary window area 170. The types, numbers, sizes, and relative locations of these areas are not critical to the invention. Figure 1A merely illustrates one possible organization of wall 100 and provides a mechanism to describe the areas in greater detail.

In the preferred implementation, ticker-market message area 120 serves two functions. When a market is open, area 120 contains a dynamic ticker display. At other times, area 120 scrolls market facts or other messages.

Video/teleconferencing areas 130 and 135 can show videos of company profiles, broadcasts, or news wires. Areas 130 and 135 can also display interactive graphics.

Interactive display area 140 preferably includes interactive display elements for special groups present at video wall 100. For example, representatives from a specific company can request a peer group display to compare the company's performance to that of its peers.

Main market display area 150 contains real-time and historical graphics showing trading information and activity in a main market. In the preferred implementation, the main market is The NASDAQ Stock Market.

Main issue display area 160 contains real-time and historical graphics for individual securities. For example, when some special event occurs, such as a new high or a public offering, main issue display area 160 can show financial information about the security. Area 160 can also show information about groups of securities, such as quotes of the ten most active securities.

The remaining area of video wall 100 in Figure 1A is commentary window area 170. In the preferred implementation, area 170 presents either live commentary of recent market activity or information about daily events.

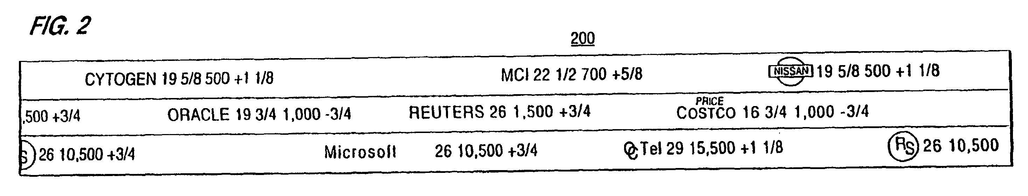

Figures 2-19 contain different types of displays for areas 120-170. Again, the displays are illustrative, not exhaustive.

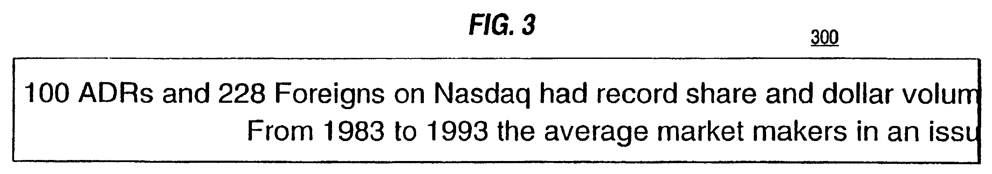

Figures 2 and 3 show ticker and market message displays for area 120. Figure 2 includes a moving ticker display 200 showing last-sales reports for The NASDAQ Stock Market. The display can also show similar reports for other markets or for trades involving ADR (American Depository Registry) and non-U.S. issues. Display 200 can also report block trades on The NASDAQ stock Market,.

Display 200 shows several moving display entries. Each entry corresponds to a security and includes a logo corresponding to the security, the price of the security, the number of shares traded, and the change in the security's price. Although display 200 preferably scrolls from right to left in three rows, the direction of the scrolling and the number of rows is a design choice.

Figure 3 shows a market message 300 in display area 120. Message 300 delivers general announcements and market facts, and gives important messages to viewers. Message 300 usually appears when there is no market activity.

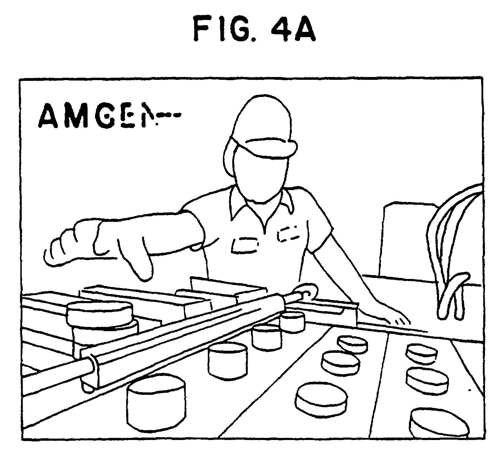

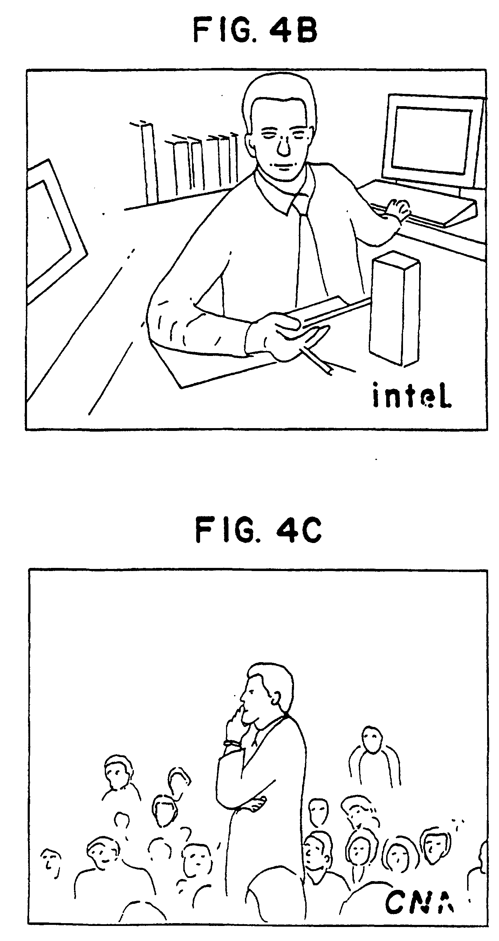

Video/teleconferencing areas 130 and 135 contain a variety of real-time or recorded video information. For example, Figure 4A shows promotional videos provided by listed companies. Figure 4B shows a teleconferencing window so company executives, economists, market analysts, or other personalities brought to the market can share their opinions and analyses. Figure 4C shows a news window to broadcast important and breaking news. Areas 130 and 135 can also contain text from news wires instead of video information.

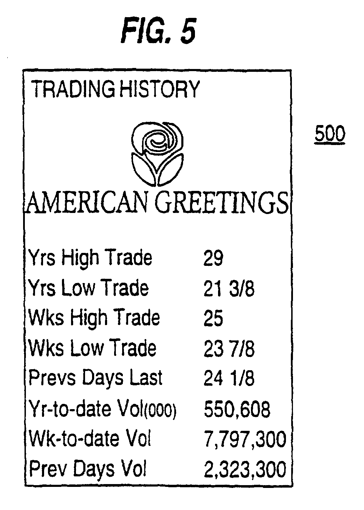

Figures 5-8 show four types of displays for interactive display area 140. Figure 5 shows a company trading history 500. History 500 provides a brief summary of the activity of a particular security and can also include the volume and high and low prices for that security.

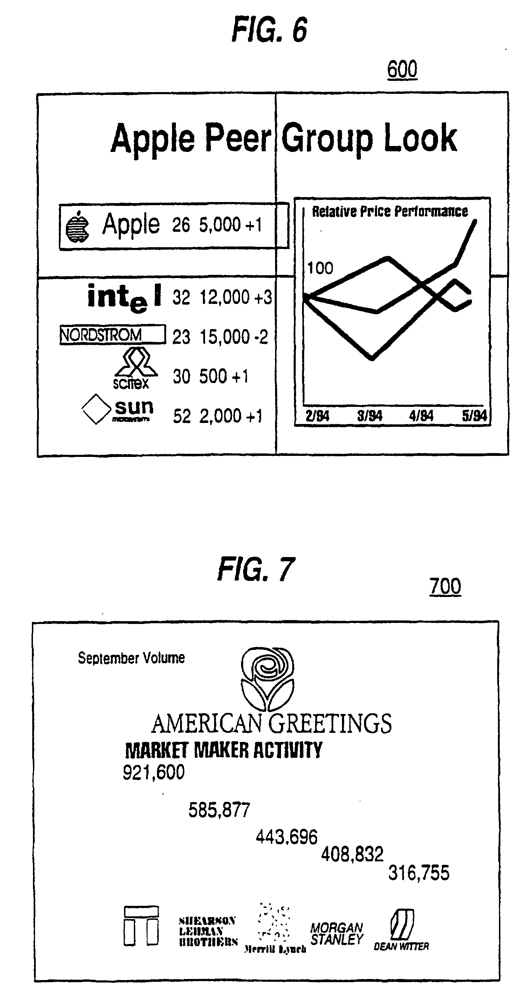

Figure 6 shows a peer group display 600. Peer group display 600 compares a company's performance to that of similar companies. Display 600 can also compare a security's price and volume for a previous day, week, or year-to-date.

Figure 7 contains an example of a market maker summary 700. Market maker summary 700 summarizes the activity of a group of market makers, such as those market makers for a particular issue. Summary 700 may also include the volume of a particular issue for each market maker's sponsorship.

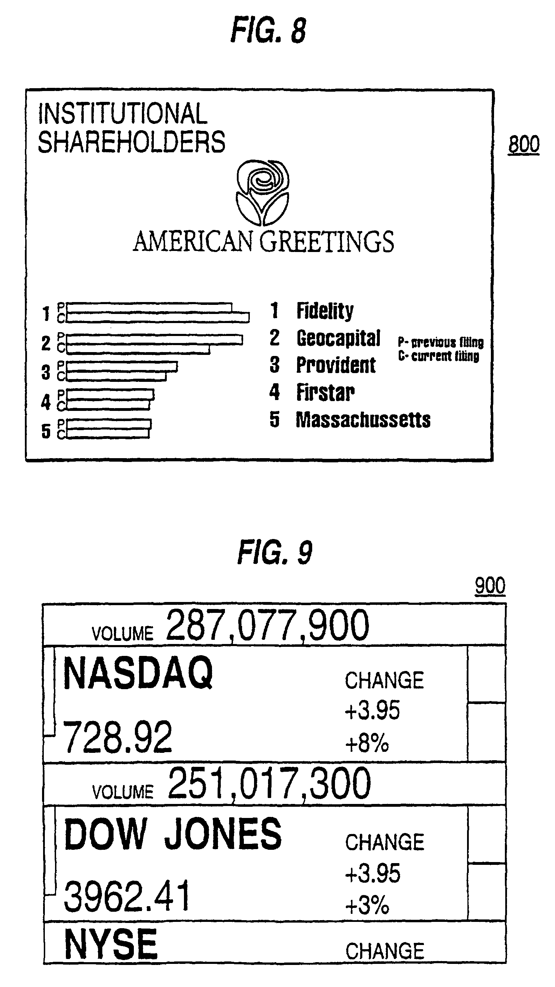

Figure 8 contains institutional holding display 800. Display 800 reveals a ranking, by shares held, of the top five institutional shareholders in an issue.

This list of displays for interactive display area 140 is not exhaustive. For example, an interactive display element could show the ranking of the top institutional shareholders in a particular security according to the number of shares held.

Figures 9-14 contain examples of displays in the main market display area 150. Figure 9 is a market summary display 900 that reviews the real-time performance of domestic stock markets. The review can also include composite indices and trading volumes as well as change and percent change information.

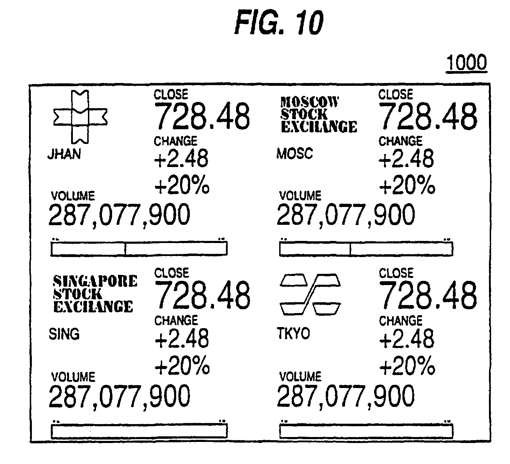

Figure 10 shows an international market summary 1000. Display 1000 summarizes the index, value, and volume for the day on major foreign exchanges.

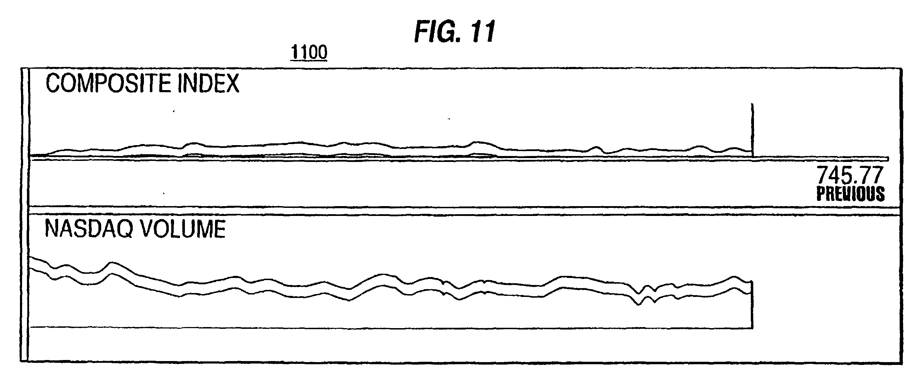

Figure 11 contains market index and volume wave display 1100. Display 1100 graphically tracks, in real time, the current day's index in volume activity. Display 1100 can also include a display of the composite index in a two and a half-dimensional (*i.e*., two dimensional with the appearance of three dimensions) display of the volume on The NASDAQ Stock Market.

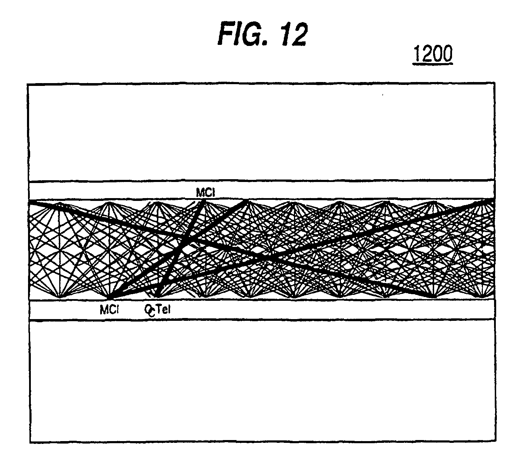

Figure 12 shows a market activity display 1200. Market activity display 1200 dynamically presents real-time trading between the largest market makers in the most actively traded and largest capitalized issues. A solid red line between two market makers identifies a trade executed in a particular security. The market makers and the security are identified by their logos.

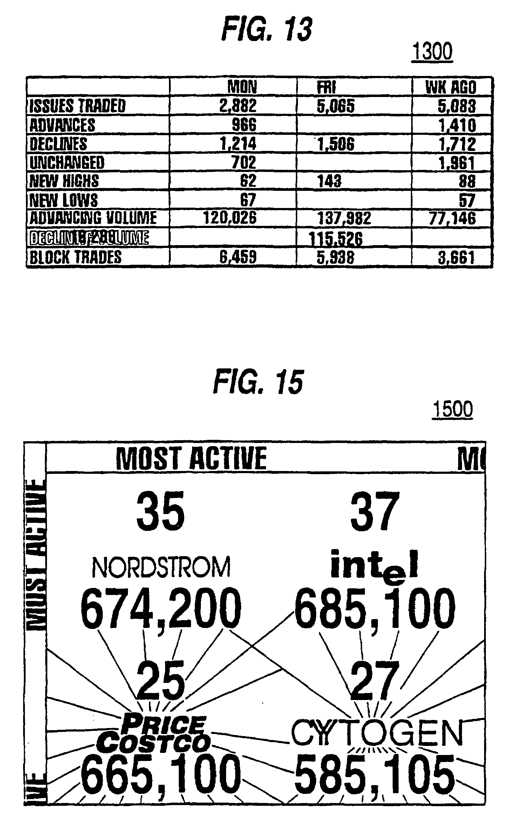

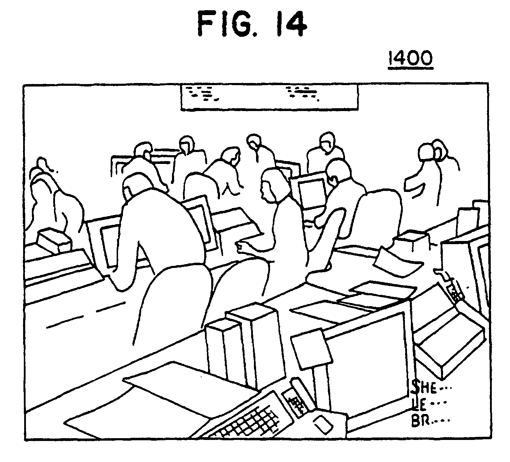

Figure 13 contains a trading summary display 1300. Display 1300 summarizes the day's trading characteristics for the market. The summary includes the number of issues traded, number of advances, number of declines, the number unchanged, new highs, new lows, advancing and declining volume, and block trades. The summary can also include values for previous day and the previous week for comparison.

Figure 14 shows a trading room window 1400. Trading window 1400 broadcasts live events from different market maker trading rooms.

Again, the displays in Figures 9-14 are not all possible uses of main market display area 150. Those displays merely illustrate some possible displays.

The main issue display area 160 can also include several different displays, some of which appear in Figures 15-18. Figure 15 contains a display 1500 for the most active issues. Display 1500 summarizes and highlights the real-time trading activities of the ten most active issues ranked by volume. Of course, display 1500 could contain the same or similar information for different numbers of issues, and could rank them differently.

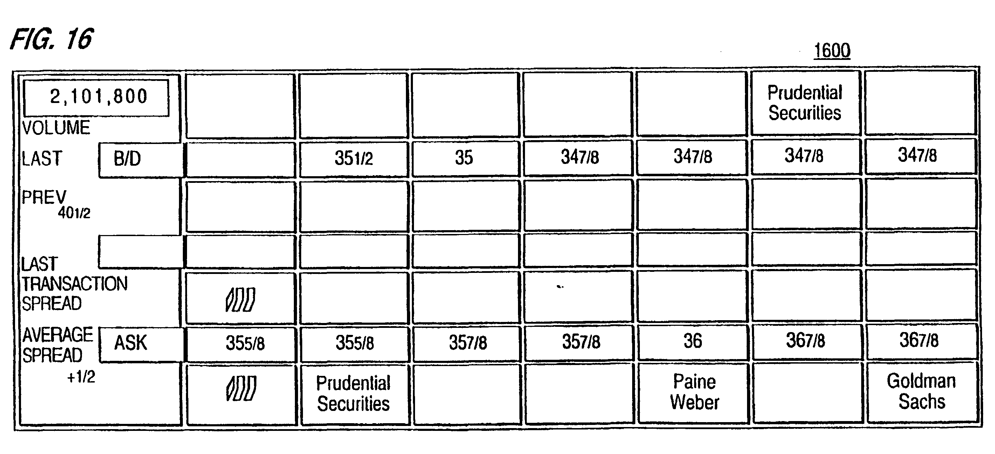

Figure 16 presents an issue quote activity display 1600 that may be accessed interactively. Display 1600 shows the dynamic quote activity of market makers in a specific issue or group of issues, and highlights the inside quote or best prices. Issue quote activity display 1500 can also show every market maker as well as the best five prices on either side of the marketing issue.

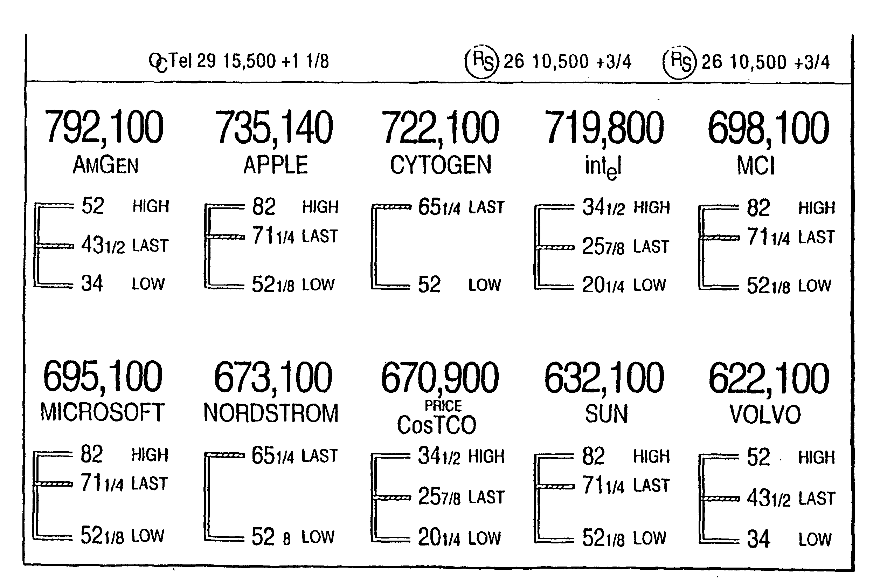

Figure 17 is summary display 1700 showing leading advancing and declining issues. Display 1700 indicates the relative price performance of the current day's leading securities.

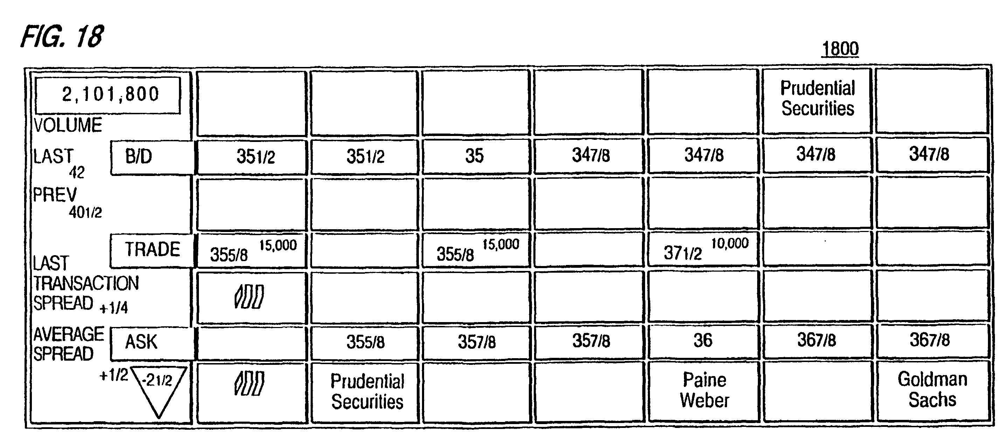

Figure 18 contains an issue trading activity display 1800 showing real-time trading activity for a particular issue or group of issues. Display 1800, which may also be interactive, graphically displays the activity of market makers as they quote and trade those issues. In addition, display 1800 highlights the market maker inventory orders and public orders and shows the pricing dynamics. Display 1800 can also show the best price over other quotes and illustrate the depth in an issue's market by showing the number of market makers at the inside.

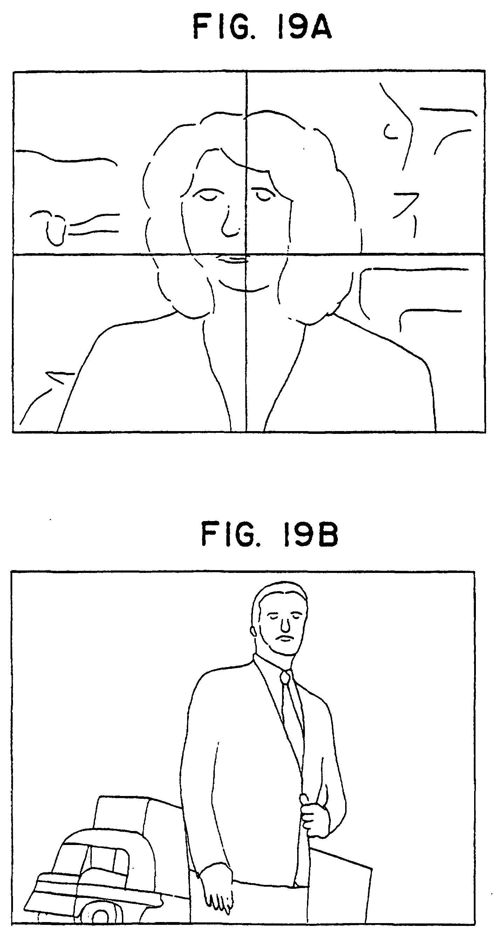

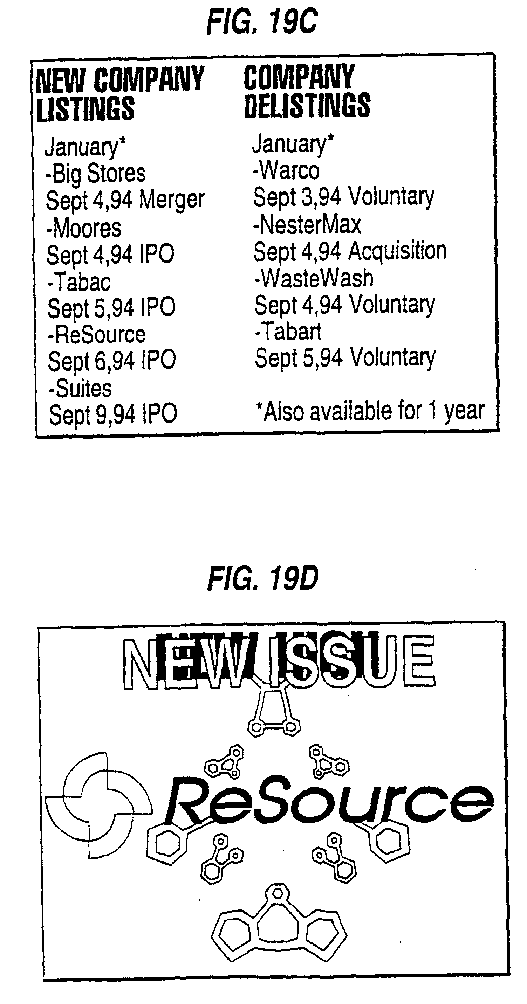

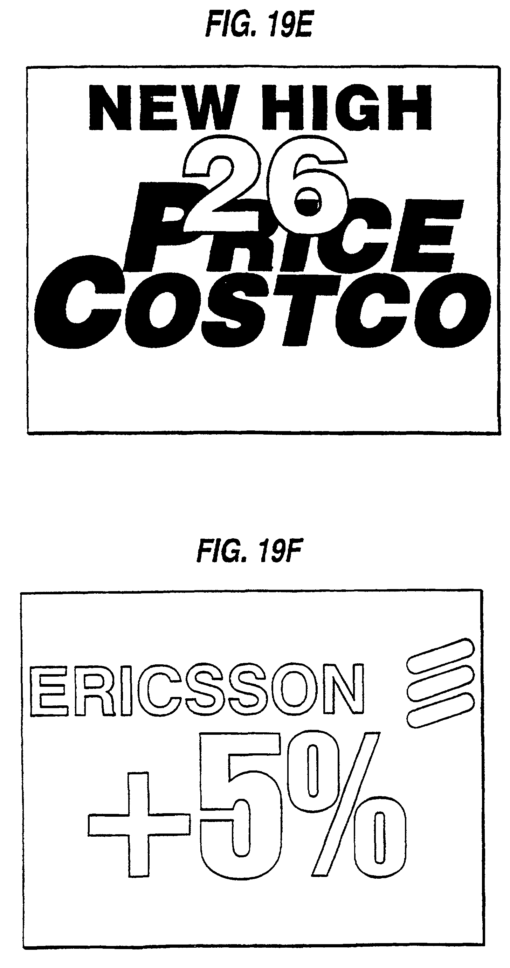

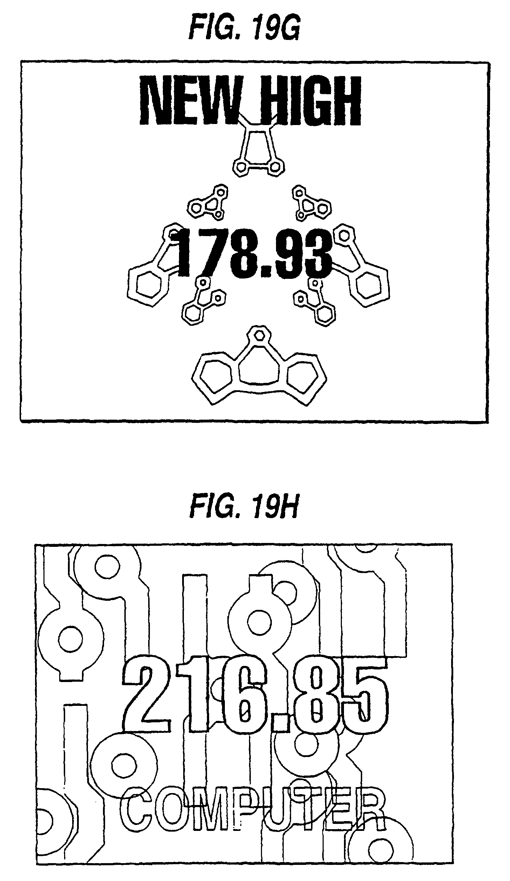

The remaining area is the commentary window area 170. Area 170 may contain several different displays, such as those shown in Figures 19A-H. Figure 19A shows live commentary to discuss the day's market activities and provide summaries and analysis. Figure 19B shows IPO conferencing for live discussion with underwriters. Figure 19C summarizes listings and delistings of issues in the previous month. Figure 19D displays an IPO flag as a graphic introduction for an IPO's first trade. Figure 19E shows a new high issue price or volume. Figure 19F highlights unusual price or volume changes when they occur during real-time trading. Figure 19G shows new highs for an index or its volume as they occur during real-time trading. Figure 19H shows when the value of an index changes significantly during real-time trading.

### ii. System elements

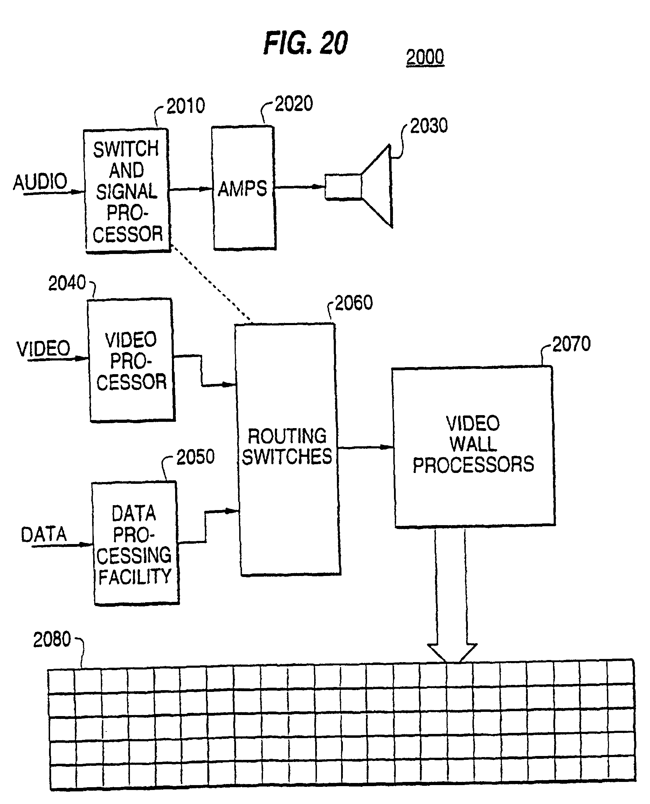

To produce the video displays in Figures 1-19A-H, a system according to this invention receives several inputs, and processes and formats those inputs to make it appear that all the screens in the video wall, or at least all the screens in some group, display a fixed or moving composite image. Figure 20 is a block diagram showing the major elements of a preferred implementation of a system 2000 according to this invention.

System 2000 in Figure 20 receives three types of inputs: audio, video, and data. The audio inputs can be live audio feeds, such as from radio or television, or can be VCR audio tracks. Possible audio inputs also include DAT (*e.g.*, for high quality audio presentations), sampled digital audio or mini-CD *(e.g.,* for sound effects), microphones (*e.g*., for speeches and presentations), CD audio *(e.g.,* for music), and analog tape *(e.g.,* for general audio information). Other audio sources can be the telephone (*e.g*., for interviews) or a tone generator (*e.g*., for diagnostic sounds).

The video inputs can be feeds from cable networks (*e.g*., CNN, FNN, CNBC), from broadcast networks *(e.g.,* ABC, CBS, NBC, FOX), from closed circuit TV, or from live camera shots of remote images, trading rooms, or boardrooms. Video inputs may also come from 3/4 inch tape, laser disks, Betacam SP, SVHS, photo CDs (*e.g*., for photographs), or a video pattern generator (*e.g*., for diagnostics).

There are also several possible sources of data. For example, the NWII (NASDAQ Workstation II) can provide market trade data from The NASDAQ Stock Market, the ACT (Automated Confirmation Transaction) Service can provide NASDAQ trade reporting data, and the CDA can report NASDAQ company information. Other data feeds include Bridge Dow Jones News, Knight Ridder Financial News, Reuters News, and AP Dow Jones. The PR news wire can provide company press releases as well. In addition, graphics imaging computers can provide financial graphs, and multimedia computers can provide data for multimedia presentations.

As Figure 20 shows, audio feeds enter an audio switch and signal processing system 2010. System 2010 switches the audio inputs to the appropriate outputs and performs certain signal processing on the audio inputs, such as mixing and equalizing, to condition them. Preferably, system 2010 uses standard audio signal processing system elements well known to persons of ordinary skill in the art.

The audio outputs of system 2010 connect to amplifiers 2020 that adjust the signal levels of the audio outputs appropriately. Amplifiers 2020 can also be standard audio equipment well known to persons of ordinary skill in the art.

Amplifiers 2020 drive speakers 2030. The type, size, and locations of speakers 2030 depend on several factors, such as the environment for system 2000 and the anticipated audience.

Video feeds enter a video processor 2040. Video processor 2040, which can include VCR equipment, conditions the video feeds to provide desired signal characteristics.

Data signals enter a data processing facility 2050 that includes a network of processors and equipment to condition, filter, store, and format the data as needed for the displays. Data processing facility 2050 also converts its outputs to video signals.

Systems 2040 and 2050 provide inputs to routing switches 2060. Routing switches 2060 connect the video signals to different outputs so each image can be displayed at different locations. Routing switches 2060 are preferably standard video switches known to persons of ordinary skill in the art. In addition, routing switches 2060 are also preferably synchronized with audio switch and signal processing system 2010 (shown schematically by the dotted line) to provide a proper performance of related audio and video information.

Routing switches 2060 provide inputs to the video wall processors 2070. In the preferred embodiment, the video wall processors are ULTRAMAX processors manufactured by IMTECH Corporation. Such processors are described in greater detail in U.S. Patent No. 4,746,981 and U.S.S.N. 08/231,431, which are incorporated herein by reference. Video wall processors 2070 receive and process high resolution VGA signals, standard video signals, or even high definition television signals, and send the processed video signals to the matrix of monitors 2080 in video wall 100.

Usually, video wall processors 2070 need to expand the video signals from video processors 2040 or data processing facility 2050 because those signals do not have the proper aspect ratio or size for the monitors 2080 on video wall 100. Processors 2070 may also control other video effects, such as splitting images.

Devices 2080 in video wall 100 preferably form a 20x5 matrix to display the video from a video source or from data processing facility 2050. Monitors 2080 collectively form the displays shown in Figures 1-19A-H.

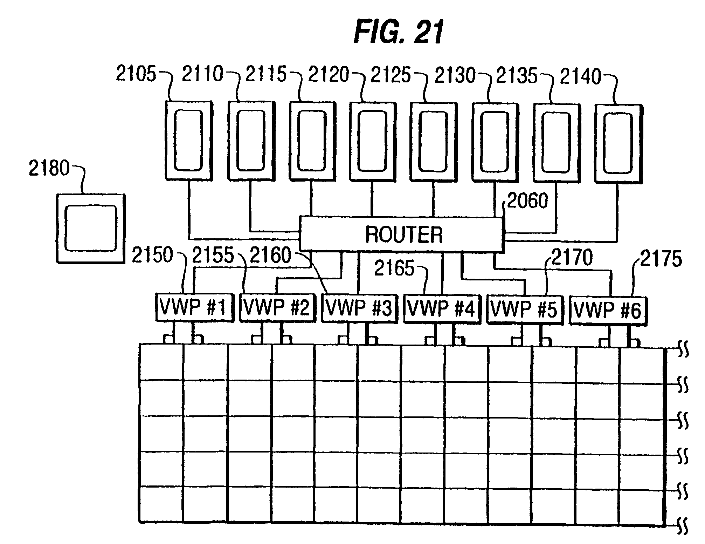

Figure 21 shows an embodiment of data processing facility 2050 of Figure 20 in greater detail. In Figure 21, data processing system 2050 includes display data processors 2105,2110,2115,2120,2125,2130,2135, and 2140. The number of such processors can vary according to the number of monitors in the video wall. For example, a 20x5 array of monitors preferably uses ten to twenty computer systems.

Each processor 2105-2140 contains a graphics adapter or display controller. The terms "graphics adapter" or "display controller" describe a component, such as a circuit board in a processor, to translate images generated by the corresponding processor into video signals for display on a video wall.

The graphics adapters also manage several display characteristics, such as resolution, color depth, hardware acceleration and video overlay. "Resolution" refers to the number of addressable pixels. For example, a 1280x1024 resolution allows the computer system to address 1280 horizontal pixels and 1024 vertical pixels. More pixels yield greater resolution and detail, which in turn provides smoother lines in an image. The disadvantage of greater resolution is speed; it takes longer to drive a system with larger numbers of pixels.

Color depth refers to the number of bits used to represent the color of a pixel on a screen. A larger number of bits allows a greater number of on-screen colors. Typical color depths are 1, 4, 8, 16 or 24 bits. A single bit only permits black and white, while twenty-four bits permits 16.7 million different colors, considered photographic quality.

Although greater color depth allows use of more colors, the trade-off is again speed. To strike a balance, the preferred embodiment uses palettes with a subset of the 16.7 million colors. A programmer can select a subset, for example 256 (2⁸), of the total 16.7 million colors. This permits the colors in the palette to be represented by only eight bits, allowing the programmer the speed of an 8-bit color range. The programmer, however, still has a 24-bit color choice.

In the preferred implementation, the graphic adapters would also have hardware acceleration circuitry to help draw shapes such as lines, arcs, and circles, and for effects, such as panning, zooming, and rotating. Hardware acceleration circuitry can also allow transfer of entire bit blocks.

Another desirable feature of the graphic adapters is video overlay. Video overlay permits integrating real-time graphics and text with an analog video signal. Most video overlay systems use a specific color as the key, with the overlaid video replacing the key color in an image.

Graphic adapters can also provide computer-generated animation, such as BITBLTS (bit block transfers), sprite animation, panning, scrolling, and frame animation. Graphic adapters can even provide color animation by changing palettes in response to display changes.

These features are conventional, and persons of ordinary skill in the art can adapt them as necessary. All these features may not be necessary for each implementation, however. Instead, the graphics adapters need include only the features needed for a particular application.

The video signals from the graphics adapters in processors 2105-2140 enter routing switches 2060 and are switched to video wall processors. Figure 21 shows six video wall processors 2150, 2155, 2160, 2165, 2170, and 2175. In one embodiment, a 20x5 array of monitors would require twenty-five video wall processors, one for every four monitors.

A master control system 2180 preferably connects and synchronizes computer systems 2105-2140. System 2180 also causes processors 2105-2140 to run the appropriate programs at the appropriate times. To do this, master control system 2180 contains a scheduler program and processes to respond to interrupts. The interrupts can be user inputs to generate a particular display or signals from programs monitoring events, such as new index or stock price values. Master control system 2180 also controls routing switches 2060 and video wall processors 2150-2175.

### B. System Operation

### 1. Functions of the system elements

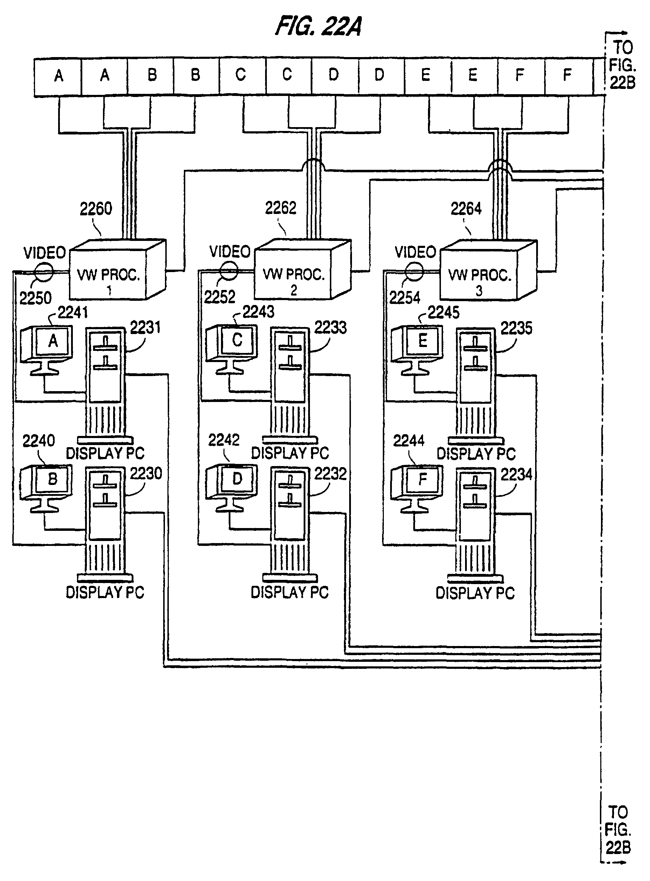

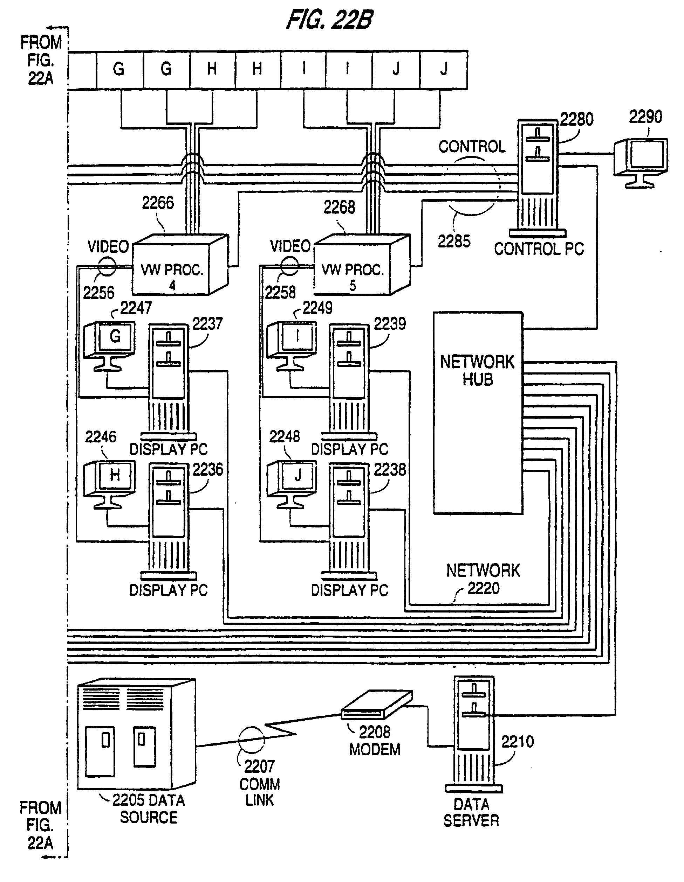

Figure 22 is a system diagram showing in greater detail the elements in the preferred implementation for providing data to the video wall. Those elements include components of data processing system 2050 (Figure 20) in greater detail.

Data from an external source 2205 travels over communications link 2207 through a modem 2208 to a data server 2210. Data server 2210 preferably has several input drivers, each corresponding to a different data source. The input drivers receive the data, recognize the data's format, remove transmission information, and extract the needed data. For example, if the input feed is NASDAQ trade data from the NWII, the information transmitted includes an identification of the securities as well as other values, such as the current trading price. A driver would extract *(i.e.,* filter) this information, place it into the proper format, and store it appropriately.

Knowing the formats of the data feeds allows persons of ordinary skill in the art to construct the input drivers. The formats for two such data feeds appear in Appendices A and B. Appendix A contains the format specification for Level 1 service (best bid/best offer). Appendix B contains the format specification for NTDS service (last sale).

Data server 2210 preferably also contains relational databases to hold the information extracted by the input drivers. The relational databases preferably allow simultaneous accesses for updating and retrieving data. In addition, the relational databases should have sufficient security features to prevent unauthorized access. Other databases or buffers could also be used depending upon the data type and the manner in which it will be processed and displayed.

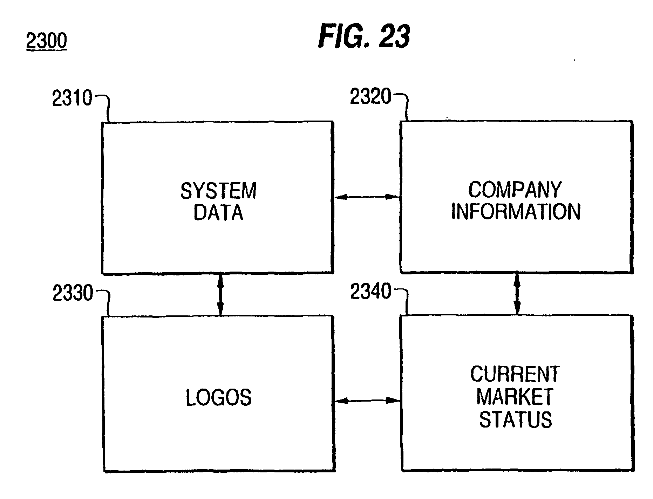

Figure 23 shows one possible arrangement of database 2300 in data server 2210. Database 2300, includes four relational databases. Database 2310 contains system data, such as triggers described below. Database 2320 includes information on the companies whose securities are represented on video wall 100. Database 2330 includes the bit maps of the logos of those companies as well as the logos for market makers and any other entities displayed on video wall 100. Database 2340 includes data on the current status of the markets supported by the system.

The data in the databases of data server 2210 preferably include small data elements and BLOBs (Binary Large Objects). Small data elements may be market data from The NASDAQ Stock Market or other sources, such as news services. BLOBs are graphics preferably in standardized file formats, such as TIFF or PCX.

Although data can be distributed over several computer systems, this arrangement is difficult to maintain. A system manager must ensure that all copies are the same and equally valid. The preferred implementation centralizes storage and avoids delays from simultaneous requests by using a sufficiently robust relational database accessed by standard calls, such as SQL or ODBC calls.

Preferably, data server 2210 connects to a network 2220 managed by a network hub 2225. Network 2220 and network hub 2225 may include standard LAN equipment allowing data server 2210 to communicate with the other data processing elements shown in Figure 22.

Those other data processing elements include display data processors 2230, 2231, 2232, 2233, 2234, 2235, 2236, 2237, 2238, and 2239. These display data processors contain graphics adapters and form the actual video displays for the different areas shown in Figure 1.

Each display data processor preferably includes a corresponding monitor 2240, 2241, 2242, 2243, 2244, 2245, 2246, 2247, 2248, and 2249, respectively. The principal purpose of those monitors is to show the video output generated by the corresponding computer systems. System operators can also use the monitors to control the corresponding data processor.

In the preferred implementation, the display data processors fetch the information for display from data server 2210. For example, if display data processors 2230-2239 are displaying a stock ticker, those data processors would retrieve from data server 2210 financial instrument information including identifiers and trade information. Using the identifiers, display data processors 2230-2239 then fetch from data server 2210, or from some other storage mechanism, a bit map for the corporate logo associated with the identifier for a particular security. The bit map would represent the logo of the corporation that issued the security. For example, MCI Corporation could have the stylized letters MCI or Sun Corporation could have the graphic representation of a cube with the stylized letters "SUN." Display data processors 2230-2239 would then combine bit maps with the associated trade information and create a video output of the stock tickers.

In another implementation, data server 2210 could automatically correlate a bit map database with the relational database containing trade information. When display data processors 2230-2239 requested information, data server 2210 would send the bit maps with the trade information.

After display data processors 2230-2239 retrieve the needed data, they format that data into the desired output display, such as those in Figures 2, 3 and 5-18. Each output display would have its own formatting program. Persons of ordinary skill could construct such programs from the requirements for that display. Standard tools are available to expedite constructing the displays.

Graphics adapters in display data processors 2230-2239 preferably create outputs in VGA format using a standard video output similar to the video signals from, for example, cable feeds, television feeds or VCRs. These outputs feed routing switches 2250, 2252, 2254, 2256, 2258, which in turn provide the outputs to video wall processors, 2260, 2262, 2264, 2266, 2268, respectively. As explained previously, video wall processors 2260-2268 change the aspect ratios and the sizes of the displays and provide other processing for the associated monitors in video wall 2270.

In a preferred embodiment, each display data processor 2230-2239 corresponds to two monitors in video wall 2270, and each video wall processor 2260-2268 can control four monitors. This organization, however, is a design choice that a person of ordinary skill in the art can adjust according to different needs.

A control computer system 2280 connects to display data processors 2230-2239 through LAN 2220 and network hub 2225, and connects to video wall processors 2260-2268 through a control bus 2285. The control computer system 2280, shown as a single computer for illustration, synchronizes video processors 2260-2268 and display data processors 2230-2239, and schedules the formatting programs that display data processors 2230-2239 execute at specified times.

Although static displays need little synchronization, dynamic displays, such as scrolling, need extensive synchronization. For example, the preferred implementation of a scrolling stock ticker uses several horizontally adjacent monitors. Each display data processor 2230-2239 controls the scrolling across its associated monitors, but control computer system 2280 supervises scrolling between monitors. To accomplish this operation in the preferred implementation, display data processors 2230-2239 for adjacent monitors all construct the same display. Control computer system 2280 then causes processors 2230-2239 to start generating the displays at fixed intervals to create the effect of images scrolling across video wall 2270.

Instead of this technique, display data processors 2230-2239 could use BITBLT, sprite, or full screen frame animation in their graphics adapters to produce scrolling. Control computer system 2280 would still be involved for synchronization.

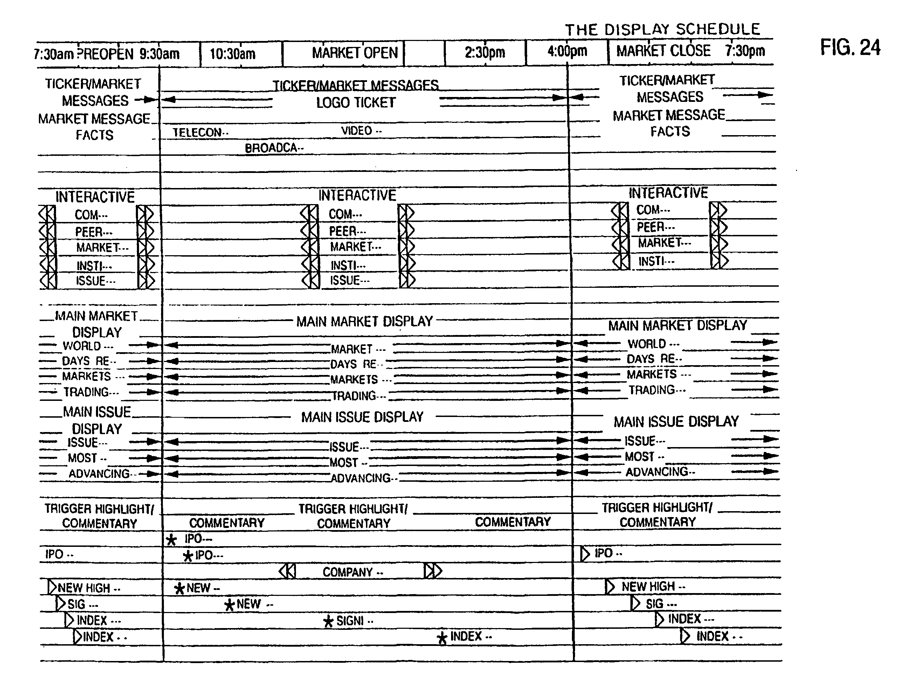

As explained above, control computer system 2280 preferably stores a schedule indicating which displays appear on which portions of video wall 2270 during each time period. Figure 24 shows a representation of such a schedule. Typically, an internal timer regularly interrupts control computer system 2280 and causes it to check the schedule. To change a display, control computer system 2280 sends messages telling the appropriate display data processors 2230-2239 to construct a new display, and telling routing switches 2250 to route those displays to the appropriate area of video wall 2270.

In addition, the control computer system 2280 is preferably coupled to a user input station 2290 to allow a user to change the displays on video wall 2270. For example, if a CEO would like to see information about his company, he could select certain displays at input station 2290. In response, control computer system 2280 would direct display data processors 2230-2239 to generate those displays, and would direct routing switches 2250 to place those displays on the appropriate areas of video wall 2270.

Control computer system 2280 can also respond to other interrupts to change the schedule of displays. For example, if a monitoring program on control computer system 2280 finds that a trigger has occurred, such as an index or a stock price reaches a new high, system 2280 changes the display on video wall 2270 according to some pre-programmed format. Computer system 2280 can also control the video routing switches to route live TV or stored video to reflect breaking news.

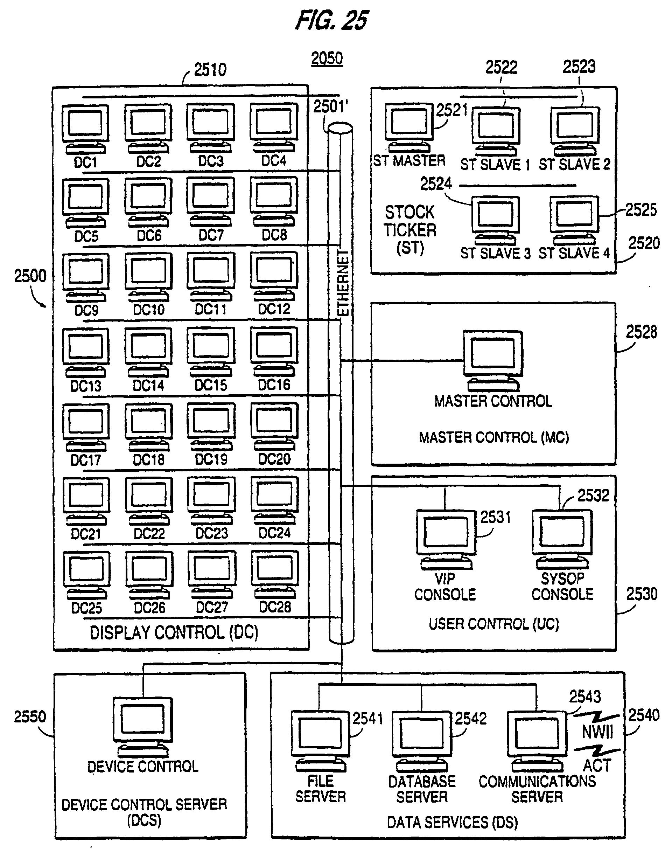

Figures 25 through 30 show a slightly different embodiment for the hardware implementation of this invention. Figure 25 shows data processing system 2050 that includes a local area network 2500, including an Ethernet backbone, called a UserNet Lan 2501, coupling several computers together. Display control 2510, which is shown for illustration purposes only as including twenty-eight separate computers, is responsible for displaying all the charts and graphs except the stock ticker.

Stock ticker system 2520 includes a stock ticker master computer 2521 coupled to four stock ticker slave computers 2522, 2523, 2524, and 2525 via Lan 2526. Stock ticker system 2520 continuously scrolls market data across monitors at the top of the video wall 2270.

In stock ticker system 2520, stock ticker master computer 2521 controls the system and receives information which it then translates into a graphic image that, as described above, preferably includes a company logo and a stock quote. To do so, stock ticker master computer 2521 reads the stock data, retrieves the proper graphics image data from storage, assembles and compresses the image, and transfers the compressed data to slave computers 2522-2525.

Those slave computers receive the compressed data and decompress it using an off-screen video buffer. Each slave computer then transfers the data in its buffer to a neighboring slave computer to effect scrolling.

Each slave computer preferably supports a display area with 1024 X 768 image. The image is divided into quadrants and split between four separate monitors on the video wall 2270. Thus, the four slave computers can generate a stock ticker across sixteen monitors.

Master controller 2528, like control computer system 2280, controls the other computer systems in Fig. 25. Controller 2528 runs the pre-defined scripts that determine what content to place on the video wall at what time. Controller 2528 also causes the appropriate content to be placed on the proper portions of video wall 2270 in response to market events or triggers and live user commands from a user console 2530.

Master controller 2528 in essence runs only one application, but that application does not control how those displays are formed. Instead, it assigns tasks to other devices, such as a display controller 2510, synchronizes the computers according to the schedules and market events, and controls the appropriate router. Importantly, master controller 2525 knows what all the other computers in the system are doing.

User console 2530 includes a VIP console 2531 and SYSOP console 2532. VIP console 2531 is preferably a computer with a touch-screen input to allow non-technical users, such as CEOs, access to video wall 2270. SYSOP console 2532 is used by the system operator or other technical personnel to correct technical problems, create content for the wall, and perform maintenance.

File server 2540 preferably includes a file server computer 2541, a database server 2542, and a communications server 2543. File server 2541 contains a copy of all executable programs on the system. Database server 2542 supplies the rest of the system with local data, such as logo bit maps, messages, schedules, and scripts. Communications server 2543 receives market data, such as from the NWII, or the ACT, and translates that data into an appropriate form for use by the display control computers 2510, the stock ticker system 2520, and the master controller 2528.

Communications server 2543 runs an application to provide market data to the other computers by requesting and monitoring data from the market data feeds and storing this data locally. The modules included to do these functions include request arbitration procedures, ACT feed handlers, NWII feed handlers, and historical feed handlers.

Database server 2542 has a request processing module handling and data distribution procedures, and a trigger processing module to manage trigger objects and control trigger events. There are also data specific modules, such as procedures for retrieving specific data, handling specific triggers, and managing specific data, and database management modules, such as interfaces to SQL ODBC, file management, error and fault handling, and log history and status procedures.

Device control server 2550 controls the serial devices described above. To do so, device control server 2550 includes client management procedures, configuration management procedures for the different devices, virtual video wall management procedures, and device drivers.

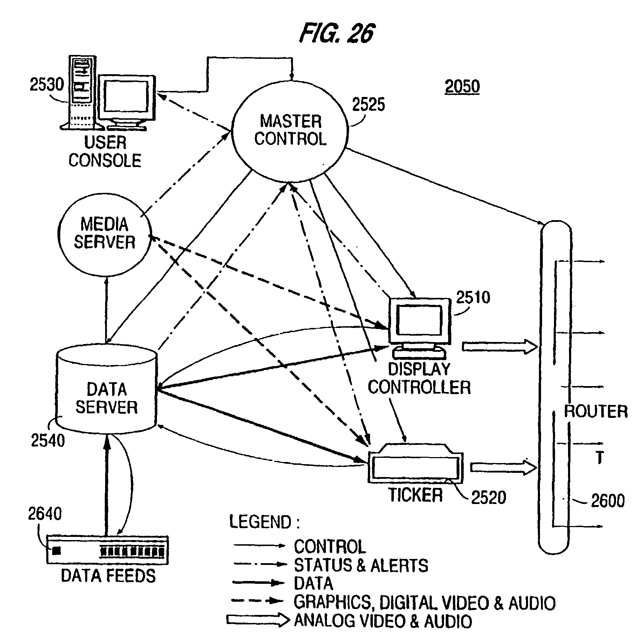

Before describing each of these systems in greater detail, however, reference is made to Figure 26 to show the data flow between the systems. The elements in Figure 26 that have the same reference numbers as elements in Figure 25 represent the same elements and will not be described again. Figure 26 also shows a router 2600 which corresponds to routing switches 2250. In addition, Media server 2620 is a system that could be used to stored media information. Data feeds 2640, such as modems or other communication devices, provide the inputs into the data server 2540. User console 2530 is also shown as including an authoring system, discussed in greater detail below.

Data processing system 2050 sends three types of messages: control, status/alert, and data. Control messages include command instructions, such as when the master controller 2528 instructs the display controller 2510 to display a certain chart. Status/alert messages include error, warning, and informational messages, such as when the device controller 2510 advises SYSOP console 2532 in user console 2530 that someone has removed a disk from a laser disk player. Data messages are market data that drive displays.

Control messages can come from a scheduled script, a user console request, or a specific trigger. In each case, master controller 2528 receives a control message from another computer on the system. A scheduled script comes from the current wall schedule running on SYSOP console 2532 in user console 2530. A user console request comes from either VIP console 2531 or from SYSOP console 2532 as a result of user input. A trigger is usually generated by the communications server 2543 in data server 2540 when a significant market event occurs.

When master controller 2528 receives a control message, it responds by sending control messages to other computers in the systems, such as to the communications server 2543 in data server 2540 (for example to set-up triggers), to device controllers 2550 (for example to play a certain laser disk player), to display controller 2510 (for example to display a certain chart), and to stock ticker system 2520 (for example to display a message or select certain stocks).

Display controller 2510 and stock ticker 2520 both require market data based on the content they are displaying. They therefore send control messages to communications server 2543 in data server 2540 to request certain data at a certain frequency.

When a computer must report some items, it sends status and alert messages. These messages provide information, such as reporting a successful loading of a chart, or report errors, such as indicating the removal of a disk player. Master controller 2528 receives all status and alert messages to see if the software can work around the problem, and sends status/alert messages to SYSOP console 2532 in user console 2530 if a system operator needs to intervene.

Data messages contain the market data that is supplied to the display controllers 2510 and to the stock ticker system 2520 by communications server 2543 in data server 2540. As explained above, database server 2542 and file server 2541, both in data server 2540, also provide local data services.

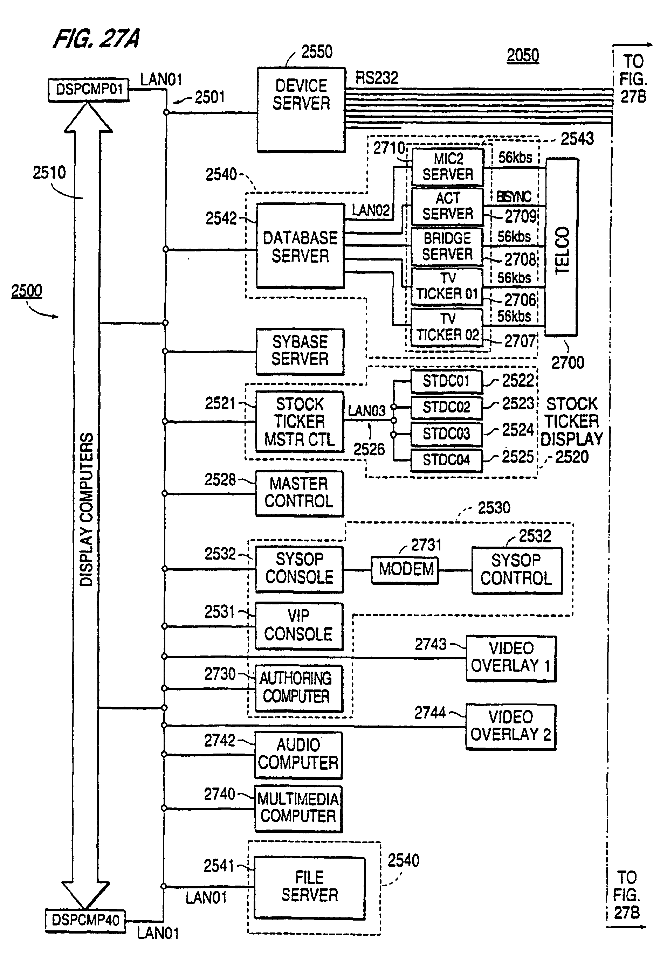

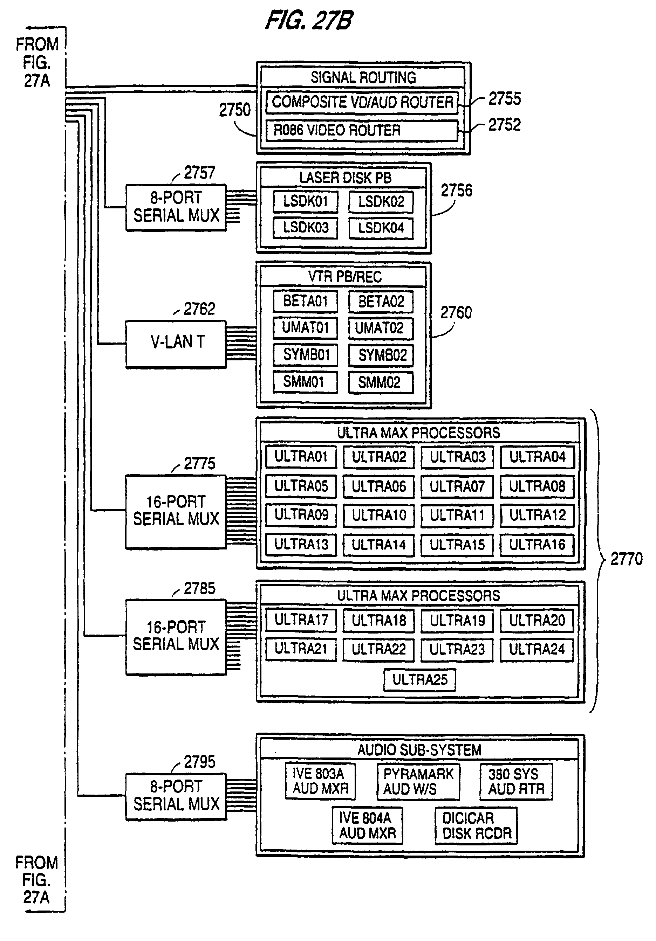

Figure 27 shows the data processing facility 2050 in greater detail. As can be seen, many of the elements shown in Figure 25 are repeated with the same reference numerals. UserNet Lan 2501 again connects display controllers 2510, stock ticker system 2520, user console 2530, data services system 2540, and device controller 2550. Communications server 2543 is shown in greater detail as including five separate servers: TV ticker servers 2706, and 2707, bridge server 2708, ACT server 2709, and NWII server 2710. All of the inputs into those servers come from modems 2700 connected to telephone lines. TV ticker servers 2706 and 2707 receive TV signals. Bridge server 2708 receives Bridge Dow Jones news. ACT server 2709 receives ACT signals, and NWII server 2710 receives the NASDAQ feed.

User console 2530 is shown as also including an authoring computer 2730 that can be used to generate additional scripts and displays. SYSOP console 2532 is connected via modem 2731 to a SYSOP control 2732 that can be remote from the location of the remainder of the system.

Multimedia computer 2740 controls multimedia displays. Audio computer 2742 controls the audio data, and video overlay computers 2743 and 2744 control video signals.

Device server 2550 is shown connected to several different types of devices. One is the signal routing system 2750 that controls routing switches 2250. Included in those routing switches are an RGBS video router 2752 and a composite video audio router 2755.

Other devices are laser disk playback device 2756 controlled through a 8-port serial multiplexer 2757, and video tape recorder playback record system 2760 controlled through a V-LAN T-switch 2762. In addition, display processors 2770 correspond to display data processors 2230-2239 and communicate through 16-port serial multiplexers 2775 and 2785. Audio subsystem 2790 communicate through 8-port serial multiplexer 2795.

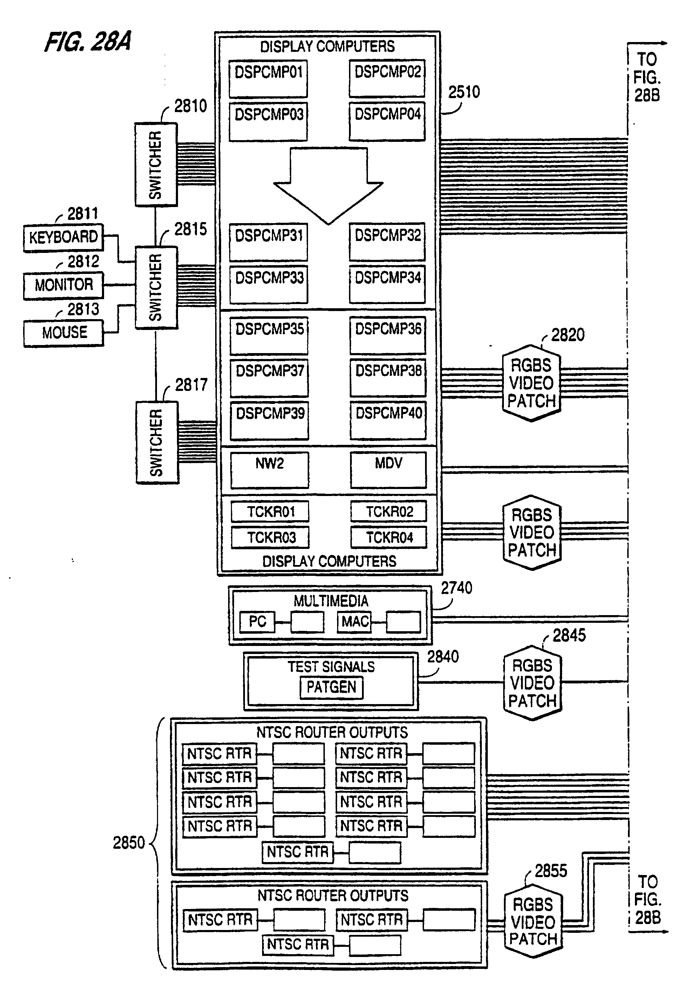

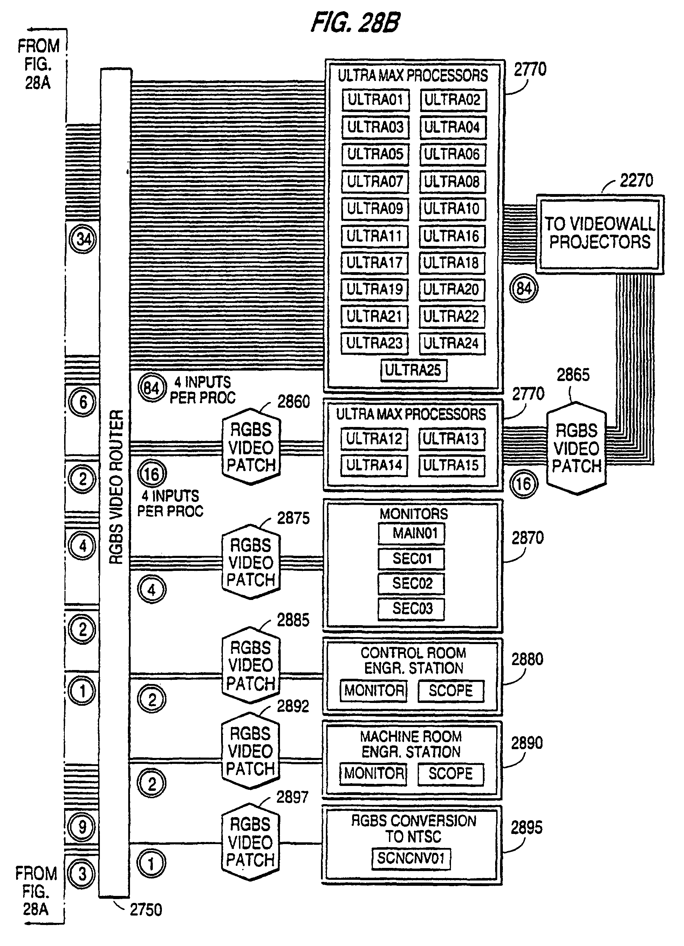

Figure 28 shows a block diagram of a system for routing the RGBS signals. In a preferred embodiment, the system in Fig. 28 has 61 RGBS inputs and 109 RGBS outputs.

RGBS video router 2750, shown in Fig. 27, forms the heart of this system. Signals fed to router 2750 include outputs from display computer 2510.

Display computer 2510 may interact with peripheral devices. Such devices include one or more keyboards 2811, one or more monitors 2812, and one or more mouses or other pointing devices 2813. All of these devices connect to switchers 2810, 2815 and 2817 that allow the devices to interact with any of the display computers 2510. Certain of the display computers 2510 also connect through an RGBS video patch 2820 to provide for manual connection in case of electrical failure. Test signals may be generated in test signal subsystem 2840. These signals connect to router 2750 via patch 2845.

Multimedia computer 2740 (Fig. 27), which can include both Intel-based PCs and Apple MacIntoshs, also connect to router 2750. In addition, video signals can come from NTSC router outputs 2850 that connect to router 2750 either directly or through video patch 2855.

Video router 2750 sends signals to the ULTRAMAX display processors 2770, both directly and, in certain cases, through video patch 2860. Processors 2770 send their outputs to the video wall 2270, again both directly and through video patch 2865.

Router 2750 also sends signals to monitors 2870 in a control room through video patch 2875, and sends signals to a control room engineering station 2880 which includes both a monitor and a scope through video patch 2885. In addition, router 2750 sends signals through video patch 2892 to a machine room engineering station 2890. Finally, router 2750 sends signals to an RGBS Conversion II NTSC system 2895 through video patch 2897.

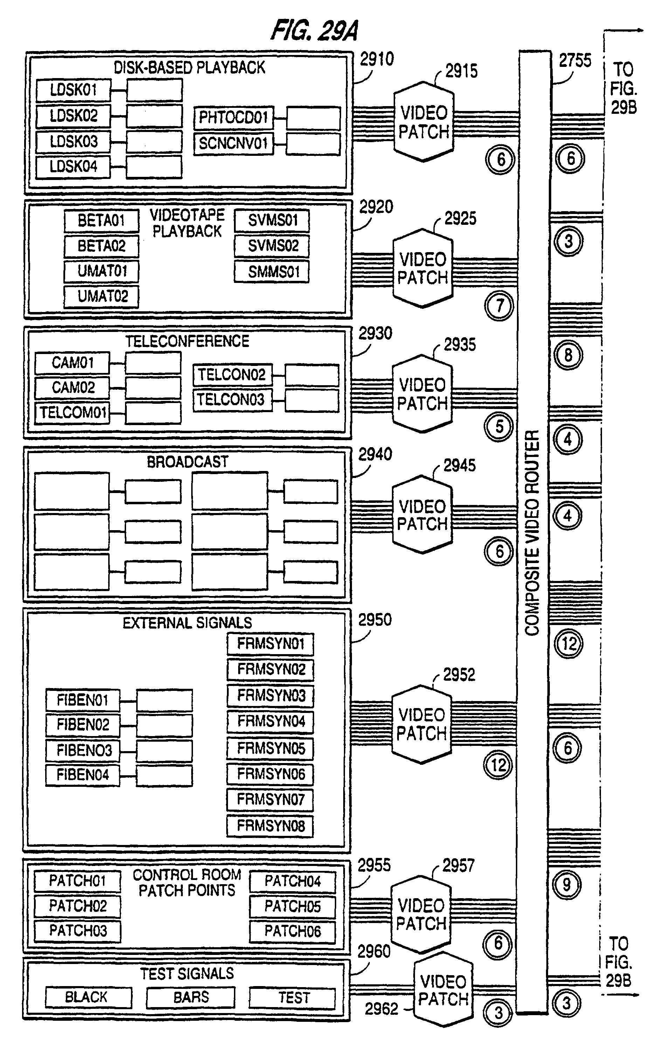

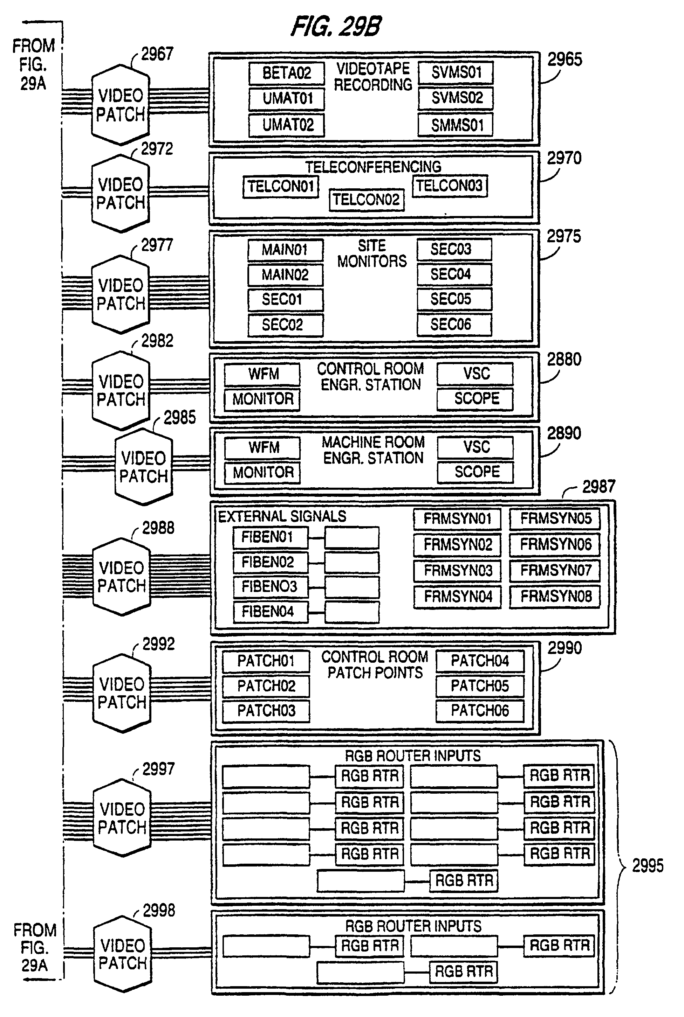

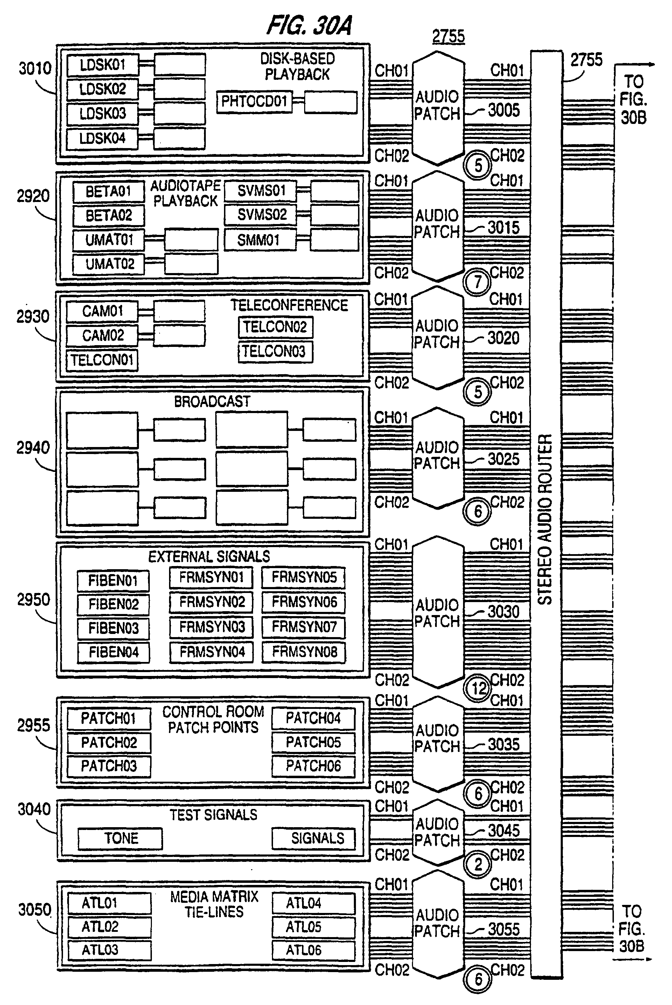

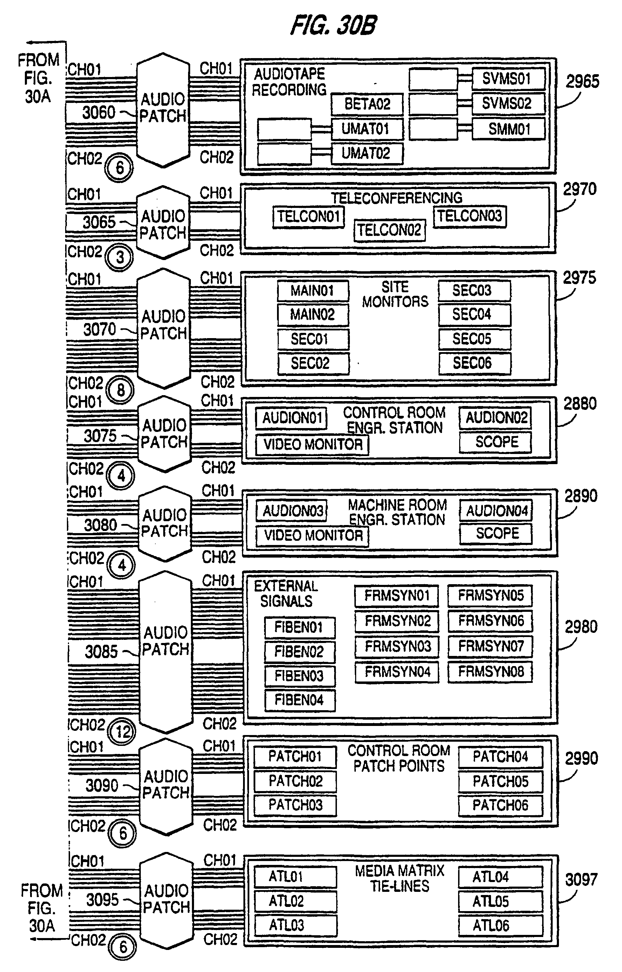

Figures 29 and 30 show details of the composite video/audio router 2755 and its connections. In Figure 29, disk-based playback 2910 connects through a video patch 2915 to router 2755, and videotape playback 2920 connects through video patch 2925 to router 2755. In addition, teleconference inputs 2930 connect through video patch 2935 to router 2755, and broadcast inputs 2940, such as from the broadcasting cable networks, connect through video patch 2945 to router 2755.

The system can also receive several external signals 2950, such as fiber-optic signals or frame synchronization signals. These connect through video patch 2955 to router 2755. For troubleshooting and system control, there are also a number of control room patch points 2955 that connect through video patch 2957 to router 2755, and test signals 2960, such as black, bar, or other test signals, that connect through video patch 2962 to router 2755.

Also connected to router 2755 are video tape recording apparatus 2965 that connect through video patch 2967, and teleconferencing outputs 2970 that connect through video patch 2972. For control and maintenance, site monitors 2975 connect to router 2755 through video patch 2977, a control room engineering station 2980, shown in Figure 28, connects to router 2755 through video patch 2982, and a machine room engineering station 2890, also shown in Figure 28, connects to router 2755 through video patch 2985.

This system can also provide external signals 2987 through video patch 2988 from router 2755, and there are several patch points 2990 that connect to router 2755 through patch 2992. Finally, RGB router inputs 2995 connect to router 2755 via video patches 2999 and 2998.

Figure 30 shows how router 2755 routes audio signals to and from many of the same devices shown in Figure 29. For example, audio signals from the disk-based playback 2910, videotape playback 2920, teleconference 2930, and broadcast inputs 2940 connect to router 2755 through audio patches 3005, 3015, 3020 and 3025, respectively. In addition, external signals 2950 and control room patch points 2955 connect to router 2755 through audio patches 3030 and 3035, respectively.

Test signals 3040, which can be tones or other test signals, connect to router 2755 through audio patch 3045. Media matrix tie-lines 3050 connect to router 2755 through audio patch 3055.

Videotape recording apparatus 2965, teleconferencing outputs 2970, and site monitors 2975 (Fig. 29) connect to router 2755 through audio patches 3060, 3065, and 3070, respectively. In addition, control room engineering station 2880 and machine room engineering station 2890 (Figure 28) connect to router 2755 through audio patches 3075 and 3080, respectively.

External signals 2988 and control room patch points 2990 (Figure 29) connect to router 2755 through audio patches 3085 and 3095, respectively. Finally, media matrix tie-lines 3097 connect to router 2755 through audio patch 3095.

### 2. Functions of the software elements

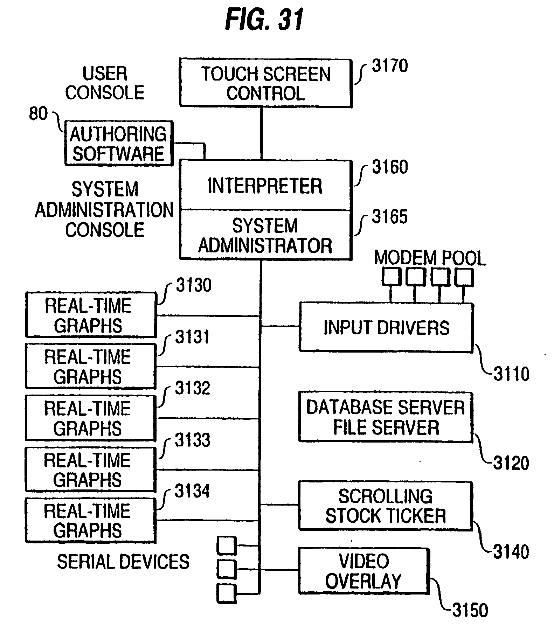

Figure 31 shows a block diagram of different software processes to support the video wall system of this invention. Input drivers 3110 and database and file servers 3120 preferably reside in database server 2210. The functions of input drivers 3110 -- receiving, filter, formatting, and storing input data -- have been described above. Database and file servers 3120 provide access to databases and files and preferably have a front end driver for local data, for example, from daily activities such as the visit of a CEO. The front end drivers allow a system administrator to maintain local data. Database and file servers 3120 also contain specific events, or triggers, that control computer system 2280 monitors to change the displays as described above.

Real-time graph applications 3130-3134 reside on display data processors 2230-2239 and generate the two-dimensional and two and a half-dimensional charts and graphs shown in Figure 1. Applications 3130-3136 preferably fetch current and historical data from data server 2210 and format that data into the appropriate form.

Scrolling stock ticker application 3140 fetches current securities trade information and bit maps of the corporate logos from database server 2210 and forms a ticker image. A stock ticker then appears to scroll across multiple monitors as described above.

Video overlay application 3150 combines analog video signals, such as live television or LDP (laser disk player), with computer-generated graphics. This program preferable resides on display data processors 2230-2239.

A master control/script interpreter 3160 on control computer system 2280 drives the entire system in real time. In the default mode, interpreter 3160 determines the order of the displays on the different areas of video wall 2250 based on pre-authored scripts. In the interactive mode, interpreter 3060 plays back pre-authored scripts based on inputs from a user or system administrator 3065.

System administrator process 3165, also on control computer system 2280, performs several functions, such as accessing system data from data server 2210. That system data includes trigger information indicating which data system administrator 3165 should check to see whether an "event" has occurred. Examples of events are an IPO or a new high for a stock or for an index. When an event occurs, system administrator 3165 notifies interpreter 3160 to cause the playback of an associated script.

Touch screen control software 3170 on user input station 2290 allows a nontechnical user to play pre-authored scripts. Such users could select from a collection of icons or text descriptions of the scripts using a touch screen as an input device. Other input devices may also provide user inputs.

Authoring software 3180 allows users to author scripts. A script is a list of instructions that drive the hardware. Scripting languages are similar to programming languages but contain instructions specific to multimedia software development. For example, the following two instructions:
LDP1 SRCH 1023
LDP1 PLAY
cause a laser disk drive attached to port 1 to search for frame 1023, and then start to play that drive. Similar instructions provide high-level control of all hardware in the system, including video routers and video wall processors, and software, such as the scrolling stock ticker or real time graphs.

Instead of entering scripts manually, a GUI may be provided to generate scripts. Furthermore, the software preferably provides a real-time interface so technical personnel can control the system without generating a script.

When using the system in Figures 25 through 30, the software can be slightly different. For example, the VIP console 2531 preferably runs a GUI-based touch screen application that allows a particular user to present market-related graphs on video wall 2250. On the other hand, the SYSOP console 2532 preferably includes four GUI-based applications. These include the Wall State Editor, which allows editing of the current state of the wall, the Wall Schedule Editor, which allows one to change the basic schedule, the Script Editor, which also allows changing of the script, and the System Monitor which allows the system operator to view signals from different portions of the system.

Each display controller 2510 runs an application that is responsible for creating the charts in response to live data. Display controllers 2510 display these charts based on command from the application running on the master controller 2525. Each display controller 2510 includes three basic types of software modules. One is the specific graph modules which correspond to each chart. Another is a data retrieval module which gets data from the data services system 2540 and provides it to the chart being rendered. A third is the client control application that receives commands from the application running on the master control in system 2525.

The graphics modules provide renderings, animations, transitions, and video/audio control. The data retrieval module provides data query, data caching, and specific data handling functions. The client control module has the slave-to-master control systems, procedures for accepting synchronization scheduling signals, and IPC handling.

Finally, there are system-specific modules such as communications modules, systems modules, and production and testing modules. The communications modules allow communication over the different local area networks, monitoring, and specific feed accesses. The system modules provide fault tolerance, error handling, ULTRAMAX drivers, and backup systems. The production testing modules include graphics, generation tools, animation tools and multimedia tools.

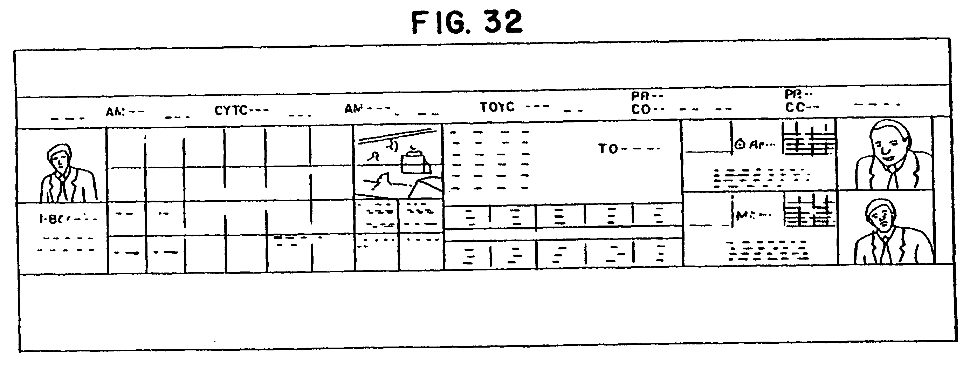

This description of preferred embodiment of this invention provides an illustration of the inventive concepts. It is not intended to contain an exhaustive description of all embodiments of the invention or to limit the invention to the precise form disclosed. One may modify and vary the invention in light of the teachings in this specification without departing from the scope of the invention. For example, the displays on the video wall can be different, such as in Figure 32. The scope of the invention is defined by the appended claims.

## Claims

1. A system (2000) for dynamically displaying graphic symbols and value information for financial instruments comprising:
an input port (2207) to receive a feed containing identifiers and corresponding values of financial instruments;
filter means (2210) for extracting from the feed the identifiers and corresponding values of the financial instruments;
a memory (2300) containing
the extracted financial instrument identifiers and corresponding values, and
a data structure (2330) associating the financial instrument identifiers with graphic symbols;
correlating means (2210) for finding in the data structure associated ones of the graphic symbols for the extracted identifiers;
formatting means (2050,2060) for forming a display signal with the graphic symbols and values corresponding to the financial instruments in the feed; and
a video wall (100) including
a plurality of individual monitors (2080) arranged into a larger display, and
means (2070) for receiving the display signals and for displaying on the individual monitors the graphic symbols and values corresponding to the financial instruments in the feed.

2. The system of claim 1 wherein the feed is a stock ticker feed and the financial instruments are stocks traded over an exchange.

3. The system of claim 2 wherein the values include the current trading price of the stocks.

4. The system of claim 3 wherein the graphic symbols include corporate logos for companies issuing the stocks.

5. The system of claim 4 wherein the formatting means (2050,2060) includes
means (2230-2239) for forming the display signals such that the video wall displays a moving ticker display (120) of corporate logos and values of trades in stocks.

6. The system of claim 1 further including
an input processor (2210) containing the input port (2207), the filter means (2210) and the memory (2300); and
a plurality of display processors (2230-2239) coupled to the input processor via a network (2220) and each containing the formatting means.

7. The system of claim 6 further including
control means (2280) for synchronizing the display processors (2230-2239).

8. The system of claim 7 wherein the control means includes
a control processor (2280) coupled to the display processors (2230-2239) and the input processor (2210) via the network (2220).

9. The system of claim 7 wherein the control means (2280) includes
means for causing the display processors to display the graphic symbols and values so they appears to move across the video wall.

10. The system of claim 6 wherein the feed is a stock ticker feed, and wherein the display processors include
stock ticker display processors including
means for displaying a moving stock ticker on the video wall;
and
a video wall display processor including
means for display non-stick ticker financial information on the video wall.

11. The system of claim 1 wherein the video wall (100) further includes video wall processors (2150-2175) for processing the display signals for display on the monitors.

12. The system of claim 1 further including
a plurality of routing switches (2060) coupled between the formatting means (2050) and the video wall (100) for controlling the routing of the display signals to the monitors.

13. The system of claim 1 further including
a video source (2040) coupled to the routing switches (2060) for producing video signals for display on the video wall.

14. The system of claim 1 further including
an audio source (2010) for producing audio signals; and
means (2030) for performing the audio signals.

15. The system of claim 1 further including:
a second input port for receiving a second feed containing financial data and means for extracting from the second feed the financial data, said formatting means adapted to form a second display signal with said financial data for displaying on said individual monitors.

16. A method for dynamically displaying graphic symbols and value information for financial instruments on a video wall including a plurality of individual monitors arranged into a larger display, the method comprising the steps of:
receiving a feed containing identifiers and corresponding values of financial instruments;
extracting from the feed the identifiers and corresponding values of the financial instruments;
storing the extracted financial instrument identifiers and corresponding values;
correlating the financial instrument identifiers with associated graphic symbols stored in a data structure;
forming a display signal from the graphic symbols and associated values corresponding to the financial instruments in the feed; and
displaying on the individual monitors the graphic symbols and values corresponding to the financial instruments in the feed.

17. Apparatus for displaying stock ticker information comprising:
a data processor including:
means (2210) for receiving a data feed of financial instrument information; and
means (2210, 2330) for combining said financial instrument information with graphic symbol data associated therewith to form market data comprising financial instrument values and graphic symbols; and
a display processor (2070) for controlling a display device (100) so as to enable display of said market data in a scrolling presentation.

18. The apparatus of claim 17 in which the graphical symbol data comprises data for the display of a company logo.

19. The apparatus of claim 18 wherein the financial instrument information includes company identifiers and wherein the company identifiers are used to access bit maps corresponding to the company logos.

20. The apparatus of claim 17 wherein said graphical symbol data is stored in a database (2330) of company logo bitmaps.

21. The apparatus of claim 17 wherein the data feed of financial instrument information is a database (2205) of financial data.

22. The apparatus of claim 17 wherein the market data scrolled on the display are updated according to market conditions.

23. The apparatus of claim 22 further comprising a filter coupled to a source containing financial data, said filter extracting the financial instrument data and placing the data in a database.

24. The apparatus of claim 17 further comprising a correlator that correlates a bitmap of said graphic symbol data with said financial instrument information contained in a database.

25. A method of displaying stock ticker information comprising the steps of:
providing a data feed containing values of financial instruments;
extracting from the feed instrument identifiers and the values of the financial instruments;
retrieving graphic symbols associated with the extracted instrument identifiers and forming a display signal comprising the extracted graphic symbols and the corresponding values of the financial instruments to produce a stock ticker feed; and
displaying the stock ticker feed across a video display.

26. The method of claim 25 in which the graphic symbols comprise company logos.

27. The method of claim 25 further comprising the step of updating data on the stock ticker in accordance with current market conditions.

## Patentansprüche

1. System (2000) zur dynamischen Anzeige Graphiksymbole und Wertinformation für Finanzinstrumente mit:
einem Eingangsanschluss (2207) zum Empfang einer Eingabe mit Identifizieren und entsprechenden Werten Von Finanzinstrumenten;
einem Filtermittel (2210) zum Extrahieren aus der Eingabe der Identifizierer und der entsprechenden Werte der Finanzinstrumente;
einem Speicher (2300), der enthält:
die extrahierten Finanzinstrument-Identifizierer und die entsprechenden Werte, und
eine Datenstruktur (2330), die die Finanzinstrument-Identifizierer mit Graphiksymbolen in Bezug setzt;
einem Korrelationsmittel (2210), um in der Datenstruktur die zugehörigen von den Graphiksymbolen der extrahierten Identifizierer zu finden;
einem Formatier-Mittel (2050, 2060) zum Ausbilden eines Anzeigesignals mit den Graphiksymbolen und Werten entsprechend den Finanzinstrumenten in der Eingabe; und
einer Videowand (100), die enthält :
eine Mehrzahl individueller Monitore (2080), die in einem größeren Display angeordnet sind, und
ein Mittel (2070) zum Empfangen der Anzeigesignale und zum Anzeigen auf den jeweiligen Monitoren der Graphiksymbole und der Werte entsprechend den Finanzinstrumenten in der Eingabe.

2. System nach Anspruch 1, bei dem die Eingabe eine Aktienticker-Eingabe und die Finanzinstrumente Aktien sind, die an einer Börse gehandelt werden.

3. System nach Anspruch 2, bei dem die Werte den gegenwärtigen Handelspreis der Aktien umfassen.

4. System nach Anspruch 3, bei dem die Graphiksymbole Firmenlogos der Firmen enthalten, die die Aktien herausgeben.

5. System nach Anspruch 4, bei dem das Formatier-Mittel (2050, 2060) enthält :
Mittel (2230 - 2239) zum Ausbilden der Anzeigesignale, so dass die Videowand eine sich bewegende Ticker-Anzeige (120) der Firmenlogos und Werte der Umsätze in den Aktien anzeigt.

6. System nach Anspruch 1, das des Weiteren enthält:
einen Eingangsprozessor (2210) mit dem Eingangsanschluss (2207), dem Filtermittel (2210) und dem Speicher (2300); und
eine Mehrzahl von Anzeigeprozessoren (2230 - 2239), die mit dem Eingangsprczessor über ein Netzwerk (2220) gekoppelt sind und von denen jeder Formatier-Mittel enthält.

7. System nach Anspruch 1, das des Weiteren enthält:
Steuermittel (2280) zum Synchronisieren der Anzeigeprozessoren (2230 - 2239).

8. System nach Anspruch 7, bei dem das Steuermittel enthält:
einen Steuerprozessor (2280), der mit den Anzeige-Prozessoren (2230 - 2239) und dem Eingangsprozessor (2210) über das Netzwerk (2220) gekoppelt ist.

9. System nach Anspruch 7, bei dem das Steuermittel (2280) enthält:
Mittel, um zu Veranlassen, dass die Anzeige-Prozessoren die Graphiksymbole und Werte so anzeigen, dass sie derart erscheinen, dase sie sich über die Videowand bewegen.

10. System nach Anapruch 6, bei dem die Eingabe eine Aktienticker-Eingabe ist, und wobei die Anzeige-Prozessoren enthalten:
Aktienticker-Anzeigeprozessoren mit
Mitteln zum Anzeigen eines sich bewegenden Aktientickers auf der Videowand; und
einen Videowand-Anzeigeprozessor mit:
Mitteln zum Anzeigen von Nichtaktienticker-Finanzinformation auf der Videowand.

11. System nach Anspruch 1, bei dem die Videowand (100) des Weiteren Videowandprozessoren (2150 - 2175) zum Verarbeiten der Anzeigeaignale zur Anzeige auf den Monitoren enthält.

12. System nach Anspruch 1, das des Weiteren enthält:
eine Mehrzahl von Routing-Schaltern (2060), die zwischen den Formatier-Mitteln (2050) und der Videowand (100) gekoppelt sind, um das Routing der Anzeigesignale zu den Monitoren zu steuern.

13. System nach Anspruch 1, das des Weiteren enthält:
eine Videoquelle (2040), die mit den Routing-Schaltern (2060) gekoppelt ist, um Videosignale zur Anzeige auf der Videowand zu erzeugen.

14. System nach Anspruch 1, das des Weiteren enthält:
eine Audioquelle (2010) zur Erzeugung von Audiosignalen; und
Mittel (2030) zum Verarbeiten der Audiosignale.

15. System nach Anspruch 1, das des Weiteren enthält:
einen zweiten Eingangsanschluss zum Empfang einer zweiten Eingabe mit Finanzdaten und Mitteln zum Extrahieren der Finanzdaten aus der zweiten Eingabe, wobei das Formatier-Mittel ausgestaltet ist, um ein zweites Anzeigesignal mit den Finanzdaten zur Anzeige auf den jeweiligen Monitoren zu bilden.

16. Verfahren zur dynamischen Anzeige Graphiksymbole und Wertinformation von Finanzinstrumenten auf einer Videowand mit einer Mehrzahl individueller Monitoren, die in einem größeren Display angeordnet sind, wobei das Verfahren die Schritte umfasst :
Empfangen einer Eingabe mit Identifizierern und entsprechenden Werte von Finanzinstrumenten;
Extrahieren aus der Eingabe der Identifizierer und entsprechender Werte der Finanzinstrumente;
Speichern der extrahierten Finanzinstrurnent-Identifizierer und entsprechender Werte;
Korrelieren der Finanzinstrument-Identifizierer mit zugehörigen Graphiksymbolen, die in einer Datenstruktur gespeichert sind;
Bilden eines Anzeigesignals aus den Graphiksymbolen und den zugehörigen Werten entsprechend den Finanzinstrumenten in der Eingabe; und
Anzeigen auf jeweiligen Monitoren der Graphiksymbole und Werte entsprechend den Finanzinstrumenten in der Eingabe.

17. Vorrichtung zur Anzeige von Aktienticker-Information mit:
einem Datenprozessor, der enthält:
Mittel (2210) zum Empfang einer Dateneingabe von Finanzinstrumentinformation; und
Mittel (2210, 2330) zum Kombinieren der Finanzinstrumentinformation mit Graphiksymboldaten, die mit diesen assoziiert sind, um Marktdaten zu bilden, die Finanzinstrumentwerte und Graphiksymbole enthalten; und
einem Anzeigeprozessor (2070) zur Steuerung der Anzeigevorrichtung (100), um so die Anzeige der Marktdaten in einer Skroll-Darstellung zu ermöglichen.

18. Vorrichtung nach Anspruch 17, bei der die Graphiksymboldaten Daten für die Anzeige eines Firmenlogos umfassen.

19. Vorrichtung nach Anspruch 18, bei der die Finanzinstrumentinformation Firmenidentifizierer enthalten, und wobei die Firmenidentifizierer zum Zugriff auf den Firmenlogos entsprechende Bit-Maps verwendet werden.

20. Vorrichtung nach Anspruch 17, bei der die Graphiksymboldaten in einer Datenbank (2330) von Firmenlogo-Bit-Maps gespeichert sind.

21. Vorrichtung nach Anspruch 17, bei der die Dateneingabe von Finanzinstrumentinformation eine Datenbank (2205) von Finanzdaten ist.

22. Vorrichtung nach Anspruch 17, bei der die Marktdaten, die auf dem Display geskrollt werden, entsprechend den Marktbedingungen aufgefrischt werden.

23. Vorrichtung nach Anspruch 22, die des Weiteren ein Filter umfasst, das mit einer Quelle verbunden ist, welche Finanzdaten enthält, wobei das Filter die Finanzinstrumentdaten extrahiert und die Daten in einer Datenbank anordnet.

24. Vorrichtung nach Anspruch 17, die des Weiteren eine Korrelationsvorrichtung enthält, welche ein Bit-Map der Graphiksymboldaten mit der Finanzinstrumentinformation. korreliert, die in der Datenbank enthalten ist.

25. Verfahren zur Anzeige von Aktienticker-Informationen mit den Schritten:
Bereitstellen einer Dateneingabe mit Werten von Finanzinstrumenten;
Extrahieren aus der Eingabe von Instrumentidentifizierern und Werten der Finanzinstrumente;
Wiederherstellen von Graphiksymbolen, die mit den extrahierten Instrument assoziiert sind, und Bilden eines Anzeigesignals mit den extrahierten Graphiksymbolen und den zugehörigen Werten der Finanzinstrumente, um eine Aktienticker-Eingabe zu erzeugen;
Anzeige der Aktienticker-Eingabe über eine Videoanzeige.

26. Verfahren nach Anspruch 25, bei dem die Graphiksymbole Firmenlogos enthalten.

27. Verfahren nach Anspruch 25, das des Weiteren den Schritt des Auffrischens der Daten des Aktientickers entsprechend den gegenwärtigen Marktbedingungen enthält.

## Revendications

1. Système (2000) pour afficher de façon dynamique des symboles graphiques et des informations de valeur pour des instruments financiers comprenant :
un port d'entrée (2207) pour recevoir une source contenant les identifiants et les valeurs correspondantes des instruments financiers ;
des moyens de filtrage (2210) pour extraire de la source les identifiants et les valeurs correspondantes des instruments financiers ;
une mémoire (2300) contenant
les identifiants des instruments financiers extraits et les valeurs correspondantes, et
une structure de données (2330) associant les identifiants des instruments financiers à des symboles graphiques ;
des moyens de corrélation (2210) pour trouver dans la structure de données les symboles graphiques associés aux identifiants extraits ;
des moyens de formatage (2050, 2060) pour former un signal d'affichage avec les symboles graphiques et les valeurs correspondant aux instruments financiers contenus dans la source ; et
un mur vidéo (100) comprenant :
une pluralité de moniteurs individuels (2080) disposés pour former un affichage plus grand, et
des moyens (2070) pour recevoir les signaux d'affichage et afficher sur les moniteurs individuels les symboles graphiques et les valeurs correspondant aux instruments financiers contenus dans la source.

2. Système selon la revendication 1, dans lequel la source est une source de "stock ticker" et les instruments financiers sont des actions échangées sur un marché.

3. Système selon la revendication 2, dans lequel les valeurs comprennent le cours fait actuel des actions.

4. Système selon la revendication 3, dans lequel les symboles graphiques comprennent les sigles des sociétés émettant les actions.

5. Système selon la revendication 4, dans lequel les moyens de formatage (2050, 2060) comprennent :
des moyens (2230 à 2239) pour former les signaux d'affichage de façon à ce que le mur vidéo affiche un "ticker" défilant (120) de sigles de sociétés et de valeurs des échanges en actions.

6. Système selon la revendication 1 comprenant en outre :
un processeur d'entrée (2210) comprenant le port d'entrée (2207), les moyens de filtrage (2210) et la mémoire (2300) ; et
une pluralité de processeurs d'affichage (2230 à 2239) couplés au processeur d'entrée par l'intermédiaire d'un réseau (2220), et chacun comprenant le dispositif de formatage.

7. Système selon la revendication 6 comprenant en outre :
des moyens de contrôle (2280) pour synchroniser les processeurs d'affichage (2230 à 2239).

8. Système selon la revendication 7, dans lequel les moyens de contrôle comprennent :
un processeur de contrôle (2280) couplé aux processeurs d'affichage (2230 à 2239) et au processeur d'entrée (2210) par l'intermédiaire du réseau (2220).

9. Système selon la revendication 7, dans lequel les moyens de contrôle (2280) comprennent des moyens permettant de déclencher l'affichage par les processeurs d'affichage des symboles graphiques et des valeurs de façon à ce qu'ils semblent se déplacer dans le mur vidéo.

10. Système selon la revendication 6, dans lequel la source est une source de "stock ticker", et dans lequel les processeurs d'affichage comprennent :
des processeurs d'affichage du "stock ticker" comprenant :
des moyens permettant d'afficher un "stock ticker" défilant sur le mur vidéo ; et
un processeur d'affichage du mur vidéo comprenant :
des moyens permettant d'afficher les informations financières hors actions du "ticker" sur le mur vidéo.

11. Système selon la revendication 1, dans lequel le mur vidéo (100) comprend en outre des processeurs du mur vidéo (2150 à 2175) permettant de traiter les signaux d'affichage pour l'affichage sur les moniteurs.

12. Système selon la revendication 1 comprenant en outre :
une pluralité de commutateurs de routage (2060) couplée entre les moyens de formatage (2050) et le mur vidéo (100) pour contrôler l'acheminement des signaux vidéo vers les moniteurs.

13. Système selon la revendication 1 comprenant en outre :
une source vidéo (2040) couplée aux commutateurs de routage (2060) afin de produire des signaux vidéo pour l'affichage sur le mur vidéo.

14. Système selon la revendication 1 comprenant en outre :
une source audio (2010) pour produire des signaux sonores ; et
des moyens (2030) permettant de reproduire les signaux sonores.

15. Système selon la revendication 1 comprenant en outre :
un second port d'entrée pour recevoir une deuxième source contenant des données financières et des moyens permettant d'extraire de la seconde source les données financières, lesdits moyens de formatage étant conçu pour former un second signal d'affichage à l'aide desdites données financières afin de les afficher sur lesdits moniteurs individuels.

16. Procédé permettant d'afficher de façon dynamique les symboles graphiques et les informations de valeur des instruments financiers sur un mur vidéo comprenant une pluralité de moniteurs individuels disposés de manière à former un affichage plus grand, lequel procédé comprend les étapes consistant à :
recevoir une source contenant les identifiants et les valeurs correspondantes des instruments financiers ;
extraire de la source les identifiants et les valeurs correspondantes des instruments financiers ;
stocker les identifiants et les valeurs correspondantes de l'instrument financier extrait ;
mettre en corrélation les identifiants de l'instrument financier et les symboles graphiques stockés dans une structure de données ;
former un signal d'affichage à partir des symboles graphiques et des valeurs associées correspondant aux instruments financiers contenus dans la source ; et
afficher sur les moniteurs individuels les symboles graphiques et les valeurs correspondant aux instruments financiers contenus dans la source.

17. Appareil pour afficher les informations du "stock ticker" comprenant :
un processeur de données comprenant :
des moyens (2210) permettant de recevoir une source de données contenant des informations relatives à des instruments financiers ; et
des moyens (2210, 2330) permettant de combiner lesdites informations relatives aux instruments financiers et des données de symboles graphiques correspondantes afin de former des données de marché comprenant des valeurs d'instruments financiers et des symboles graphiques ; et
un processeur d'affichage (2070) permettant de contrôler un dispositif d'affichage (100) de façon à permettre l'affichage desdites données de marché sous forme de défilement.

18. Appareil selon 1a revendication 17, dans lequel les données de symboles graphiques comprennent des données permettant d'afficher le sigle d'une société.

19. Appareil selon la revendication 18, dans lequel les informations relatives aux instruments financiers comprennent les identifiants des sociétés et dans lequel les identifiants des sociétés sont utilisés pour accéder à des images en points correspondant aux sigles des sociétés.

20. Appareil selon la revendication 17, dans lequel lesdites données de symboles graphiques sont stockées dans une base de données (2330) d'images en points correspondant aux sigles des sociétés.

21. Appareil selon la revendication 17, dans lequel la source de données contenant des informations relatives aux instruments financiers est une base de données (2205) de données financières.

22. Appareil selon la revendication 17, dans lequel les données du marché défilant sur l'affichage sont mises à jour en fonction des conditions du marché.

23. Appareil selon la revendication 22 comprenant en outre un filtre couplé à une source contenant des données financières, ledit filtre permettant d'extraire les données relatives aux instruments financiers et de placer ces données dans une base de données.

24. Appareil selon la revendication 17 comprenant en outre un corrélateur qui met en corrélation des images en points desdites données de symboles graphiques avec lesdites informations relatives aux instruments financiers contenues dans une base de données.

25. Procédé d'affichage des informations du "stock ticker" comprenant les étapes consistant à :
fournir une source de données contenant des valeurs d'instruments financiers ;
extraire de la source les identifiants et les valeurs des instruments financiers ;
extraire des symboles graphiques associés aux identifiants de l'instrument extrait et former un signal d'affichage comprenant les symboles graphiques extraits et les valeurs correspondantes des instruments financiers afin de produire une source de "stock ticker" ; et
afficher la source du "stock ticker" sur un affichage vidéo.

26. Procédé selon la revendication 25, dans lequel les symboles graphiques comprennent les sigles des sociétés.

27. Procédé selon la revendication 25 comprenant en outre une étape de mise à jour des données sur le "stock ticker" en fonction des conditions actuelles du marché.
